# EUROPEAN PATENT APPLICATION

(11) **EP 4 682 725 A1**
(43) Date of publication of application: **21.01.2026**
(21) Application number: 25189553.8
(22) Date of filing: 15.07.2025
(51) Int. Cl.: G06F 11/07, G06F 11/30, G06F 11/32

(54) **CONTROLLER, CONTROL METHOD, AND CONTROL PROGRAM**

(30) Priority: 19.07.2024 JP 2024115916
(71) Applicant: Yokogawa Electric Corporation, Tokyo 180-8750 (JP)
(72) Inventor: TAKAHASHI, Masahiro, Musashino-shi, Tokyo, 180-8750, (JP); KISA, Masafumi, Musashino-shi, Tokyo, 180-8750, (JP)
(74) Representative: Winter, Brandl - Partnerschaft mbB

(57) **Abstract**

A controller (10) collects data from a field device (30) that is included in a plant, detects an anomaly that has occurred in at least one of a processor module (P) and an input output module (M) based on the collected data, executes an action on an alarm that indicates the anomaly when the detected anomaly is likely to be caused by a soft error, and notifies s the engineer (E) of the alarm on which the action is executed.

## Description

### FIELD

The present disclosure relates to a controller, a control method, and a control program.

### BACKGROUND

A soft error is a phenomenon in which a polarity of a semiconductor that controls retention and arithmetic bits is inverted for some reason (mainly, electronic excitation of internal atoms due to cosmic rays and radiation) in a circuit inside a semiconductor chip, and inside information is destroyed. The soft error can be recovered to the original state by rewriting data, unlike destruction and deterioration of a physical apparatus (see, for example, Japanese Patent No. 6656593).

It is difficult to reduce handling of an alarm that is caused by a soft error. For example, when an anomaly that is caused by a soft error occurs in a processor module or an input output module (IOM), an anomaly occurrence alarm (appropriately referred to as an "alarm") is given even if an administrator on site, such as a plant, need not handle the anomaly. Therefore, in reality, an alarm that is given on site, such as a plant, needs to be handled.

The present disclosure has been conceived in view of the foregoing situation, and an object of the present disclosure is to reduce handling of an alarm that is caused by a soft error.

### SUMMARY

According to an aspect of the embodiments, a controller includes a collection unit that collects data from a device that is included in a system, a detection unit that detects an anomaly that has occurred in at least one of a processor module and an input output module based on the collected data, an execution unit that executes an action on an alarm that indicates the anomaly when the detected anomaly is likely to be caused by a soft error, and a notification unit that notifies a user of the alarm on which the action is executed.

According to an aspect of the embodiments, a control method that is implemented by a computer, the control method includes collecting data from a device that is included in a system, detecting an anomaly that has occurred in at least one of a processor module and an input output module based on the collected data, executing an action on an alarm that indicates the anomaly when the detected anomaly is likely to be caused by a soft error, and notifying a user of the alarm on which the action is executed.

According to an aspect of the embodiments, a control program that causes a computer to execute a process, the process includes collecting data from a device that is included in a system, detecting an anomaly that has occurred in at least one of a processor module and an input output module based on the collected data, executing an action on an alarm that indicates the anomaly when the detected anomaly is likely to be caused by a soft error, and notifying a user of the alarm on which the action is executed.

### BRIEF DESCRIPTION OF THE DRAWINGS

FIG. 1 is a diagram illustrating a configuration example and a process example of an anomaly monitoring system according to one embodiment;
FIG. 2 is a diagram illustrating a specific example of the entire anomaly monitoring system according to one embodiment;
FIG. 3 is a diagram illustrating a specific example of a controller of the anomaly monitoring system;
FIG. 4 is a block diagram illustrating a configuration example of each of apparatuses in the anomaly monitoring system according to one embodiment;
FIG. 5 is a diagram illustrating an example of a detection result storage unit of the controller according to one embodiment;
FIG. 6 a diagram illustrating an example of an alarm information storage unit of the controller according to one embodiment;
FIG. 7 is a diagram illustrating an example of a report information storage unit of the controller according to one embodiment;
FIG. 8 is a diagram illustrating a specific example 1 of each of processes of the anomaly monitoring system according to one embodiment;
FIG. 9 is a diagram illustrating a specific example 2-1 of each of the processes of the anomaly monitoring system according to one embodiment;
FIG. 10 is a diagram illustrating a specific example 2-2 of each of the processes of the anomaly monitoring system according to one embodiment;
FIG. 11 is a diagram illustrating a specific example 2-3 of each of the processes of the anomaly monitoring system according to one embodiment;
FIG. 12 is a diagram illustrating a specific example 2-4 of each of the processes of the anomaly monitoring system according to one embodiment;
FIG. 13 is a diagram illustrating a specific example 2-5 of each of the processes of the anomaly monitoring system according to one embodiment;
FIG. 14 is a diagram illustrating a specific example 3-1 of each of the processes of the anomaly monitoring system according to one embodiment;
FIG. 15 is a diagram illustrating a specific example 3-2 of each of the processes of the anomaly monitoring system according to one embodiment;
FIG. 16 is a diagram illustrating a specific example 3-3 of each of the processes of the anomaly monitoring system according to one embodiment;
FIG. 17 is a diagram illustrating a specific example 4 of each of the processes of the anomaly monitoring system according to one embodiment;
FIG. 18 is a flowchart illustrating a specific example 1-1 of the flow of each of the processes of the anomaly monitoring system according to one embodiment;
FIG. 19 is a flowchart illustrating a specific example 1-2 of the flow of each of the processes of the anomaly monitoring system according to one embodiment;
FIG. 20 is a flowchart illustrating a specific example 2-1 of the flow of each of the processes of the anomaly monitoring system according to one embodiment;
FIG. 21 is a flowchart illustrating a specific example 2-2 of the flow of each of the processes of the anomaly monitoring system according to one embodiment;
FIG. 22 is a flowchart illustrating a specific example 2-3 of the flow of each of the processes of the anomaly monitoring system according to one embodiment;
FIG. 23 is a flowchart illustrating a specific example 3 of the flow of each of the processes of the anomaly monitoring system according to one embodiment; and
FIG. 24 is a diagram illustrating a hardware configuration example according to one embodiment.

### DETAILED DESCRIPTION OF THE PREFERRED EMBODIMENTS

Embodiments of a controller, a control method, and a control program according to the present disclosure will be described in detail below with reference to the drawings. Meanwhile, the present disclosure is not limited by the embodiments described below.

A configuration and a process of an anomaly monitoring system 100 according to one embodiment, a configuration and a process of each of apparatuses of the anomaly monitoring system 100, a specific example of each of processes of the anomaly monitoring system 100, a flow of each of the processes of the anomaly monitoring system 100, and effects of one embodiment will be described below.

### 1. Configuration and process of anomaly monitoring system 100

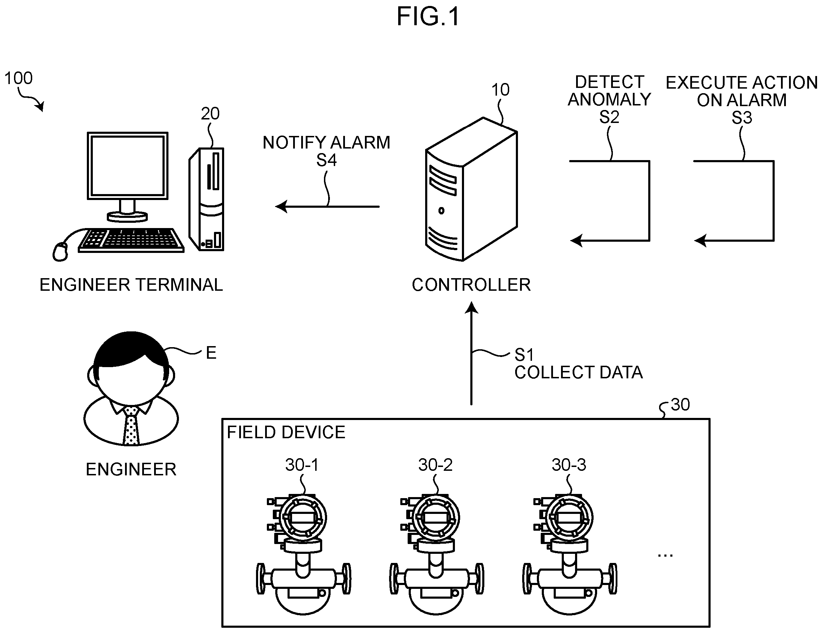

A configuration and a process of the anomaly monitoring system 100 according to one embodiment will be described below with reference to FIG. 1 to FIG. 3. In the following, a configuration example of the entire anomaly monitoring system 100, a specific example of the entire anomaly monitoring system 100, a specific example of a controller 10 of the anomaly monitoring system 100, a process example of the anomaly monitoring system 100, and effects of the anomaly monitoring system 100 will be described. Meanwhile, in one embodiment, the controller 10 that controls a plant will be described as one example, but an application target and the field of use are not specifically limited.

### 1-1. Configuration example of entire anomaly monitoring system 100

A configuration example of the entire anomaly monitoring system 100 will be described below with reference to FIG. 1. FIG. 1 is a diagram illustrating a configuration example and a process example of the anomaly monitoring system 100 according to one embodiment. The anomaly monitoring system 100 includes the controller 10, an engineer terminal 20, and a plurality of field devices 30. Here, the controller 10, the engineer terminal 20, and the field devices 30 are communicably connected to one another via a predetermined communication network (not illustrated) and an input output module M. Meanwhile, various kinds of communication networks, such as the Internet or a dedicated line, may be adopted as the predetermined communication network.

### 1-1-1. Controller 10

The controller 10 is an apparatus that controls the field devices 30 that are included in a plant, and an apparatus that monitors an anomaly that occurs in the plant. For example, the controller 10 is installed in an operator room or the like that monitors the plant. Meanwhile, the anomaly monitoring system 100 that is illustrated in FIG. 1 may include the plurality of controllers 10. Further, in the example illustrated in FIG. 1, a case is illustrated in which the controller 10 is implemented by a Field Control Station (FCS) controller or a Safety Control Station (SCS) controller, but the controller 10 may be implemented by a desktop Personal Computer (PC), a notebook PC, a smartphone, a server apparatus, a cloud system, or the like.

### 1-1-2. Engineer terminal 20

The engineer terminal 20 is an administrator terminal that is used by an engineer E who is an administrator of the anomaly monitoring system 100, and is implemented by a Human Interface Station (HIS) or the like that has a function to monitor operation of the plant. Meanwhile, the anomaly monitoring system 100 illustrated in FIG. 1 may include the plurality of engineer terminals 20.

### 1-1-3. Field devices 30

The field devices 30 (30-1, 30-2, 30-3, ...) are devices that are installed in the plant and acquire various kinds of data. For example, the field devices 30 are measurement devices, such as pressure gauges, flow meters, or vibration meters, and installed in a plant site.

### 1-1-4. Input output module M

The input output module M enables transmission and reception of various kinds of data between the controller 10 and the field devices 30. For example, the input output module M may be configured as an independent device and connected between the controller 10 and the field devices 30, may be built-in to the controller 10, or may be built-in to the field devices 30.

### 1-2. Specific example of entire anomaly monitoring system 100

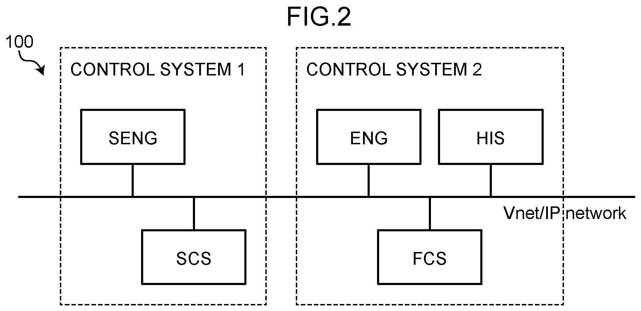

A specific example of the entire anomaly monitoring system 100 will be described below with reference to FIG. 2. FIG. 2 is a diagram illustrating a specific example of the entire anomaly monitoring system 100 according to one embodiment. In the example illustrated in FIG. 2, a control system 1 that includes an SCS controller that is a safety control system and a control system 2 that includes an FCS controller that performs plant control are included. Further, each of the devices that are included in the control system 1 and the control system 2 are connected to one another via a control bus (Vnet/IP) that is a real-time process control bus.

As illustrated in FIG. 2, the control system 1 includes, for example, an "SCS" that is the controller 10 that constitutes the SCS, and a "SENG" that is the engineer terminal 20 that constructs a system of the control system 1 and manages maintenance of the control system 1. Further, the control system 1 illustrated in FIG. 2 may include an HIS that implements the function to monitor operation of the plant.

Furthermore, as illustrated in FIG. 2, the control system 2 includes, for example, an "FCS" that is the controller 10 that constitutes an FCS, an "ENG" that is the engineer terminal 20 that constructs a system of the control system 2 and manages maintenance of the control system 2, and an "HIS" that implements the function to monitor operation of the plant. Moreover, in the control system 2 illustrated in FIG. 2, the "ENG" and the "HIS" may be integrated with each other.

### 1-3. Specific example of controller 10 of anomaly monitoring system 100

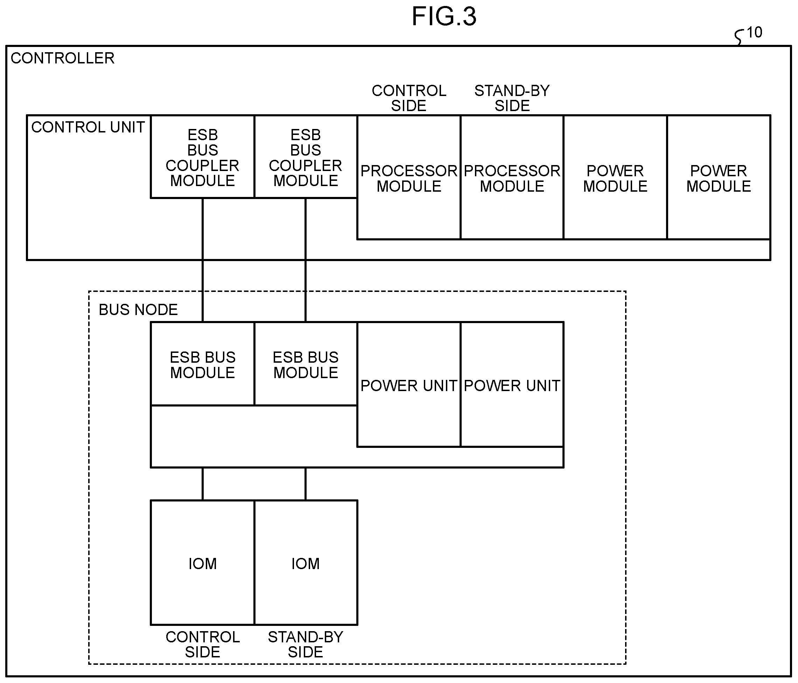

A specific example of the controller 10 of the anomaly monitoring system 100 will be described below with reference to FIG. 3. FIG. 3 is a diagram illustrating a specific example of the controller 10 of the anomaly monitoring system 100. In the example illustrated in FIG. 3, the controller 10 includes a control unit and a bus node.

As illustrated in FIG. 3, the control unit includes, for example, a processor module P_{C} on a control side, a processor module P_{S} on a standby side, a plurality of Extended Serial Backboard (ESB) bus coupler modules, and a plurality of power modules. Further, the plurality of ESB bus coupler modules are connected to a bus node.

Furthermore, as illustrated in FIG. 3, the bus node includes, for example, a plurality of ESB bus modules, a plurality of power units, an input output module M_{C} on the control side, and an input output module M_{S} on the standby side. Furthermore, the plurality of ESB bus modules are connected to the control unit.

In the controller 10 as described above, the processor module P and the input output module M are duplicated, but may be triplicated, and a redundancy configuration is not specifically limited. Moreover, the controller 10 as described above is configured such that the bus node including the input output module M is built in, but may be configured such that the bus node is installed outside the controller 10.

### 1-4. Process example of anomaly monitoring system 100

A process example of the anomaly monitoring system 100 will be described below with reference to FIG. 1. In the following, a data collection process (Step S1), an anomaly detection process (Step S2), an action execution process (Step S3), and an alarm notification process (Step S4) will be described. Meanwhile, processes from Step S1 to Step S4 below may be performed in a different order. Furthermore, some of the processes from Step S1 to Step S4 may be omitted.

### 1-4-1. Data collection process

Firstly, the controller 10 collects various kinds of data from the field devices 30 via the input output module M (Step S1). For example, the controller 10 collects, from the field device 30-1, measurement data that is acquired by the field device 30-1 via an input output module M-1. Further, the controller 10 collects, from the field device 30-2, measurement data that is acquired by the field device 30-2 via the input output module M-2. Further, the controller 10 collects, from the field device 30-3, measurement data that is acquired by the field device 30-3 via an input output module M-3.

### 1-4-2. Anomaly detection process

Secondly, the controller 10 detects an anomaly that has occurred in the control system (Step S2). For example, the controller 10 diagnoses the collected measurement data, and detects a temporary anomaly that has occurred in the processor module **P, an** internal memory diagnosis anomaly that has occurred in the input output module M, or the like.

### 1-4-3. Action execution process

Thirdly, the controller 10 executes an action on an alarm (Step S3). For example, when detecting a temporary anomaly that has occurred in the processor module **P,** the controller 10 executes an alarm mask on a system alarm of the processor module P such that the alarm enters a hidden state. At this time, when the detected temporary anomaly is a second or subsequent temporary anomaly in the same processor module **P,** the controller 10 does not execute the alarm mask on the system alarm of the processor module P. Meanwhile, the engineer E is able to set execution or non-execution of the alarm mask.

**In** contrast, when detecting a temporary anomaly that has occurred in the processor module **P,** the controller 10 adds a continuous use permission message indicating that continuous use is permitted to the system alarm of the processor module P. Meanwhile, the engineer E is able to set addition or non-addition of the continuous use permission message.

Furthermore, when detecting an internal memory diagnosis anomaly that has occurred in the input output module M, the controller 10 executes an alarm mask on a system alarm of the input output module M such that the alarm enters a hidden state. At this time, when the detected internal memory diagnosis anomaly is a second or subsequent internal memory diagnosis anomaly in the same input output module M, the controller 10 does not execute the alarm mask on the system alarm of the input output module M . Meanwhile, the engineer E is able to set execution or non-execution of the alarm mask.

In contrast, when detecting the internal memory diagnosis anomaly that has occurred in the input output module M, the controller 10 adds a message indicating that continuous use is permitted to the system alarm of the input output module M. Meanwhile, the engineer E is able to set addition or non-addition of the continuous use permission message.

### 1-4-4. Alarm notification process

Fourthly, the controller 10 notifies the engineer E of the alarm (Step S4). For example, the controller 10 transmits the system alarm on which the action is executed to the engineer terminal 20. At this time, the controller 10 hides the system alarm, on which the alarm mask is executed, in a system alarm view of the engineer terminal 20. **In** contrast, the controller 10 displays the system alarm, on which the alarm mask is not executed, in the system alarm view of the engineer terminal 20. Further, the controller 10 transmits a system report that indicates a history of the system alarm to the engineer terminal 20, and displays the system repot on a historical message report window of the engineer terminal 20.

Furthermore, when the control system in which the anomaly has occurred is not recovered, the controller 10 is able to re-notify the engineer E of the anomaly occurrence alarm. At this time, the controller 10 displays the re-notified anomaly occurrence alarm on the engineer terminal 20 independently of whether or not the alarm mask is set or the number of occurrences of the anomaly.

### 1-5. Effects of anomaly monitoring system 100

In the following, an overview and a problem of an anomaly monitoring system 100P according to a reference technology will be first described, and thereafter, effects of the anomaly monitoring system 100 will be described.

### 1-5-1. Overview and problem of anomaly monitoring system 100P

The overview and the problem of the anomaly monitoring system 100P according to the reference technology will be described below. In the anomaly monitoring system 100P, when the system is automatically recovered from a temporary anomaly that is caused by a soft error, the engineer E need not cope with the anomaly. For example, Firstly, when a temporary anomaly occurs in the processor module P, a controller 10P according to the reference technology automatically restarts and notifies an alarm. Secondly, when the internal memory diagnosis anomaly occurs in the input output module M, the controller 10P automatically restarts and notifies an alarm. Thirdly, when the anomaly occurrence alarm is a specific target code, the controller 10P automatically restarts and notifies an alarm, and continuous use is permitted.

However, in the anomaly monitoring system 100P, there is a problem in that the alarm does not allow the engineer E to promptly recognize that "handling is not needed", and therefore, in reality, certain handling is performed on site even when the handling is not needed.

### 1-5-2. Overview of anomaly monitoring system 100

An overview of the anomaly monitoring system 100 according to one embodiment will be described below. In the anomaly monitoring system 100, when the system is automatically recovered from a temporary anomaly that is caused by a soft error, a measure is taken such that handling on site is not needed.

Specifically, the anomaly monitoring system 100 performs a process as described below. Firstly, when detecting a temporary anomaly that has occurred in the processor module P, the controller 10 executes the alarm mask on the system alarm of the processor module P and hides the system alarm of the engineer terminal 20. Secondly, when detecting an internal memory diagnosis anomaly that has occurred in the input output module M, the controller 10 executes the alarm mask on the system alarm of the input output module M and hides the system alarm of the engineer terminal 20. Thirdly, when detecting a temporary anomaly that has occurred in the processor module P or an internal memory diagnosis anomaly that has occurred in the input output module M, the controller 10 adds the continuous use permission message to the processor module P or the system alarm of the input output module M and notifies an alarm to which a message that allows the engineer E to promptly recognize that handling is not needed is added.

At this time, when the detected temporary anomaly is a second or subsequent temporary anomaly in the same processor module P or when the detected internal memory diagnosis anomaly is a second or subsequent internal memory diagnosis anomaly in the same input output module M, the controller 10 displays the system alarm on the engineer terminal 20. Further, when the control system in which the anomaly has occurred is not recovered, the controller 10 displays the anomaly occurrence alarm that is re-notified to the engineer terminal 20, independently of whether or not the alarm mask is set or the number of occurrences of the anomaly.

### 1-5-3. Effects of anomaly monitoring system 100

Effects of the anomaly monitoring system 100 according to one embodiment will be described. Firstly, when detecting a first temporary anomaly that has occurred in the processor module P, the anomaly monitoring system 100 hides the system alarm of the engineer terminal 20 to reduce handling that is needed by the engineer E. Secondly, when detecting a first internal memory diagnosis anomaly that has occurred in the input output module M, the anomaly monitoring system 100 hides the system alarm of the engineer terminal 20 to reduce handling that is needed by the engineer E. Thirdly, when the anomaly occurrence alarm is a specific target code, that is, when detecting an anomaly that is caused by a soft error, the anomaly monitoring system 100 notifies a system alarm to which the continuous use permission message is added to reduce handling that is needed by the engineer E.

As described above, the anomaly monitoring system 100 is able to reduce handling of an alarm that is caused by a soft error.

### 2. Configuration and process of each of apparatuses in anomaly monitoring system 100

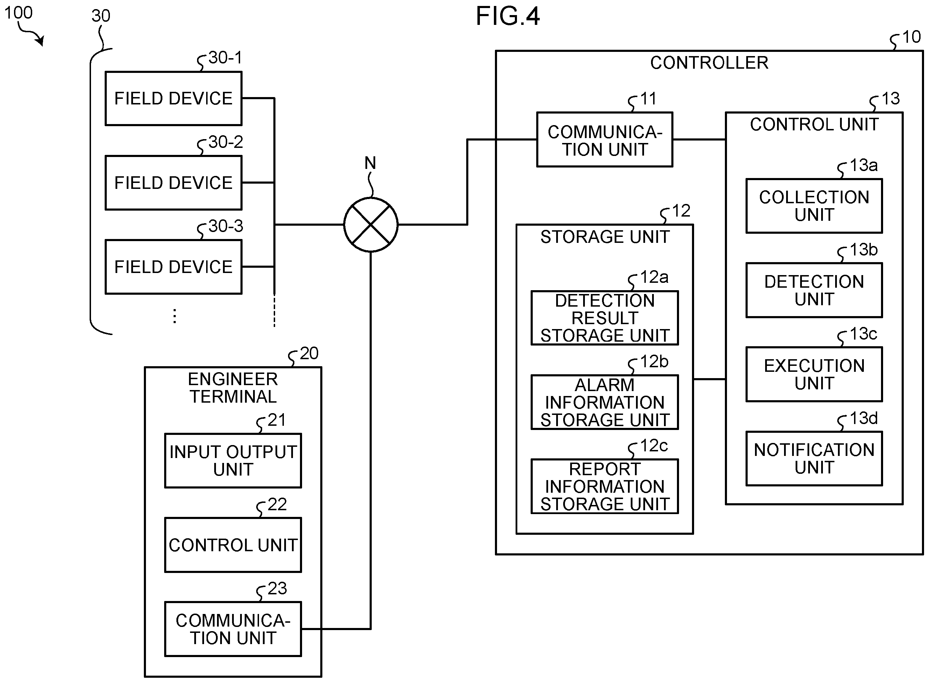

A configuration and a process of each of apparatuses that are included in the anomaly monitoring system 100 illustrated in FIG. 1 will be described below with reference to FIG. 4. FIG. 4 is a block diagram illustrating a configuration example of each of the apparatuses in the anomaly monitoring system 100 according to one embodiment. In the following, a configuration example of the entire anomaly monitoring system 100 according to one embodiment, a configuration example and a process example of the controller 10, a configuration example and a process example of the engineer terminal 20, and a configuration example and a process example of the field devices 30 will be described.

### 2-1. Configuration example of entire anomaly monitoring system 100

A configuration example of the entire anomaly monitoring system 100 will be described. The anomaly monitoring system 100 includes the controller 10, the engineer terminal 20, and the field devices 30 (30-1, 30-2, 30-3, ...). Further, the controller 10, the engineer terminal 20, and the field devices 30 are communicably connected to one another via a communication network N that is implemented by the Internet, a dedicated line, or the like and the input output module M (not illustrated).

### 2-2. Configuration example and process example of controller 10

A configuration example and a process example of the controller 10 will be described. The controller 10 includes a communication unit 11, a storage unit 12, and a control unit 13. Meanwhile, the controller 10 may include an input unit (for example, a keyboard or a mouse) that receives various kinds of operation from an administrator of the anomaly monitoring system 100 and a display unit (for example, a liquid crystal display) for displaying various kinds of information.

### 2-2-1. Communication unit 11

The communication unit 11 controls communication with a different apparatus. For example, the communication unit 11 performs data communication with each of communication apparatuses via a router or the like. Further, the communication unit 11 is able to perform data communication with a terminal (not illustrated).

### 2-2-2. Storage unit 12

The storage unit 12 stores therein various kinds of information that are referred to when the control unit 13 operates, and various kinds of information that are acquired when the control unit 13 operates. The storage unit 12 includes a detection result storage unit 12a, an alarm information storage unit 12b, and a report information storage unit 12c. Here, the storage unit 12 may be implemented by, for example, a semiconductor memory device such as a Random Access Memory (RAM) or a flash memory, or a storage device, such as a hard disk or an optical disk. Meanwhile, in the example illustrated in FIG. 4, the storage unit 12 is arranged inside the controller 10, but may be arranged outside the controller 10 or it may be possible to arrange a plurality of storage units.

### 2-2-2-1. Detection result storage unit 12a

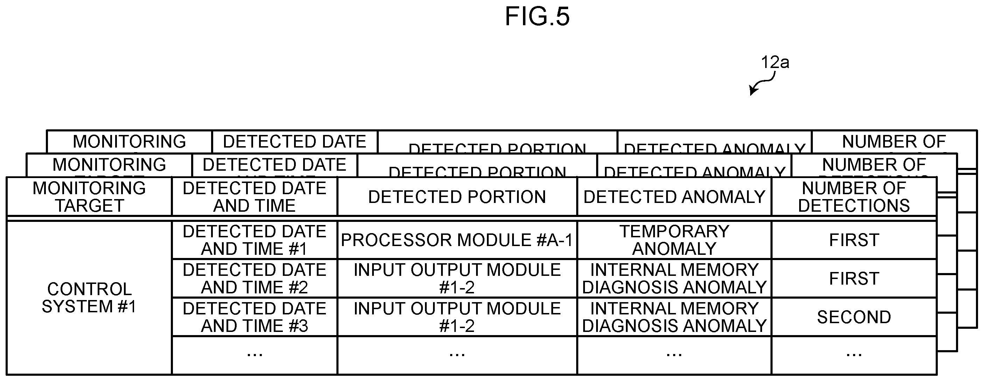

The detection result storage unit 12a stores therein a detection result. For example, the detection result storage unit 12a stores therein a detection result that is output by a detection unit 13b of the control unit 13 (to be described later). An example of data that is stored in the detection result storage unit 12a will be described below with reference to FIG. 5. FIG. 5 is a diagram illustrating an example of the detection result storage unit 12a of the controller 10 according to one embodiment. **In** the example illustrated in FIG. 5, the detection result storage unit 12a includes items such as a "monitoring target", a "detected date and time", a "detected portion", a "detected anomaly", and a "number of detections".

The "monitoring target" indicates identification information for identifying a control system that is a monitoring target or a control targe of the controller 10, and is, for example, an identification number or an identification symbol of a plant control system. The "detected date and time" indicates a date and time at which a detection result is output, and is represented by, for example, year-month-day and hour-minute-second. The "detected portion" indicates identification information for identifying a portion in which an anomaly is detected, and is, for example, an identification number or an identification symbol of the processor module **P,** an identification number or an identification symbol of the input output module M, an identification number or an identification symbol of the field devices 30 that are connected to the input output module M, or the like. The "detected anomaly" indicates a type of the detected anomaly, and is, for example, a software-caused anomaly, such as a temporary anomaly or an internal memory diagnosis anomaly, a non-software-caused anomaly, such as a physical anomaly or a communication anomaly, or the like. The "number of detections" indicates a total number of detected anomalies, and is, for example, a total number of temporary anomalies that are detected in the same processor module P, a total number of internal memory diagnosis anomalies that are detected in the same input output module M.

Specifically, FIG. 5 illustrates an example in which, with respect to a monitoring target that is identified by a "control system #1", data of {detected date and time: "detected date and time #1", detected portion: "processor module #A-1", detected anomaly: "temporary anomaly", detected number of times: "first time" }, {detected date and time: "detected date and time #2", detected portion: "input output module #1-2", detected anomaly: "internal memory diagnosis anomaly", detected number of times: "first time" }, {detected date and time: "detected date and time #3", detected portion: "input output module #1-2", detected anomaly: "internal memory diagnosis anomaly", detected number of times: "second time"}, ... is stored in the detection result storage unit 12a.

### 2-2-2-2. Alarm information storage unit 12b

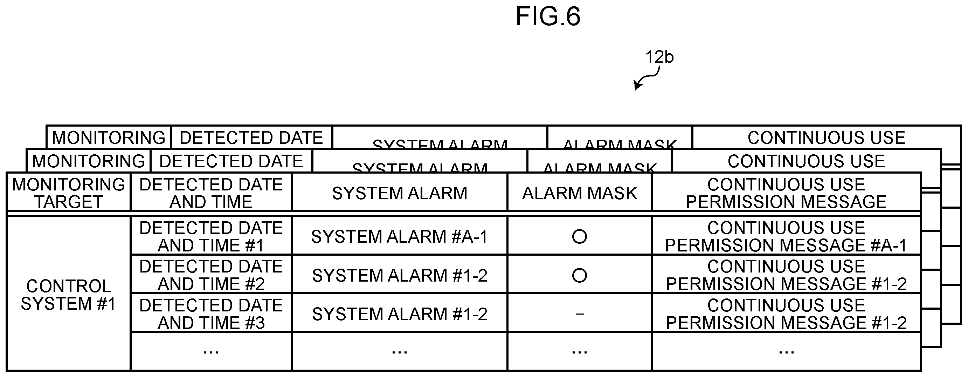

The alarm information storage unit 12b stores therein alarm information. For example, the alarm information storage unit 12b stores therein an alarm that is output by an execution unit 13c of the control unit 13 (to be described later) and an alarm that is notified by a notification unit 13d. An example of data that is stored in the alarm information storage unit 12b will be described below with reference to FIG. 6. FIG. 6 is a diagram illustrating an example of the alarm information storage unit 12b of the controller 10 according to one embodiment. In the example illustrated in FIG. 6, the alarm information storage unit 12b includes items such as a "monitoring target", a "detected date and time", a "system alarm", an "alarm mask", and a "continuous use permission message".

The "monitoring target" indicates identification information for identifying a control system that is a monitoring target or a control targe of the controller 10, and is, for example, an identification number or an identification symbol of a plant control system. The "detected date and time" indicates a date and time at which a detection result is output, and is represented by, for example, year-month-day and hour-minute-second. The "system alarm" indicates a system alarm that represents an alarm that is detected in the control system, and is, for example, an alarm that indicates, as an alarm that represents a process based on the alarm detected by the detection unit 13b in the processor module P or the input output module M, a process, such as transition to "Fail" indicating a fail state, transition to "Control" indicating a control side, transition to "Stand-By" indicating a stand-by side, execution of "Self Diag Error" indicating a self-diagnosis error, or execution of "Copy" indicating data copy. The "alarm mask" indicates presence or absence of masking on a system alarm that represents an anomaly that has occurred in the control system, and, for example, "○" indicates a case in which the alarm is not displayed and "-" indicates a case in which the alarm is displayed. The "continuous use permission message" is a message that is based on an anomaly and that is added by the execution unit 13c, and is, for example, a message, such as a continuous use permission message of "Recover Continuously Usable".

Specifically, FIG. 6 illustrates an example in which, with respect to the monitoring target that is identified by the "control system #1", data of {detected date and time: "detected date and time #1", system alarm: "system alarm #A-1", alarm mask: "O", continuous use permission message: "continuous use permission message #A-1"}, {detected date and time: "detected date and time #2", system alarm: "system alarm #1-2", alarm mask: "○", continuous use permission message: "continuous use permission message #1-2"}, {detected date and time: "detected date and time #3", system alarm: "system alarm #1-2", alarm mask: "-", continuous use permission message: "continuous use permission message #1-2"}, ... is stored in the alarm information storage unit 12b.

### 2-2-2-3. Report information storage unit 12c

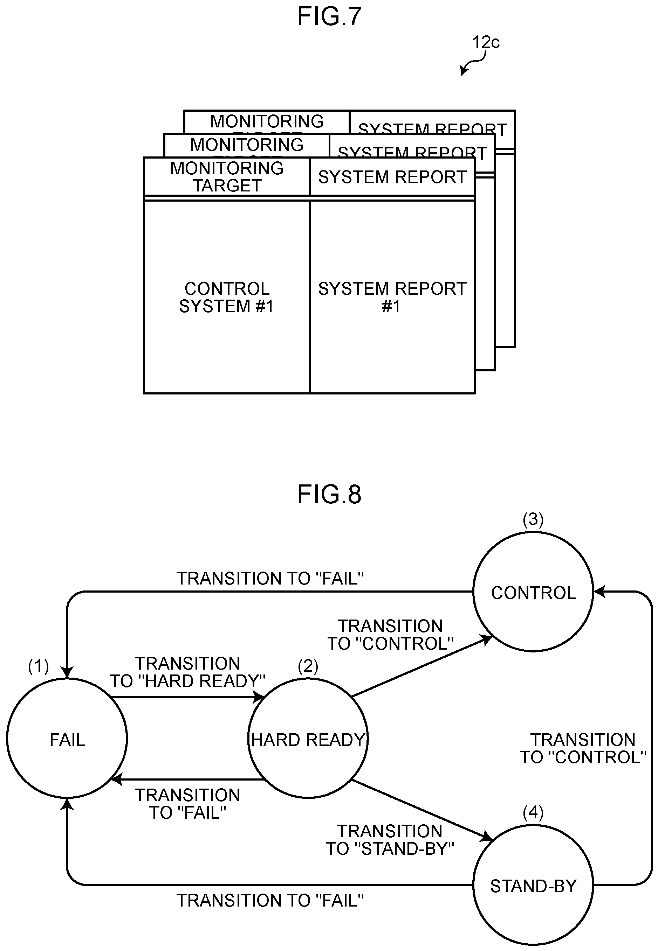

The report information storage unit 12c stores therein report information. For example, the report information storage unit 12c stores therein a system report that indicates the history of the system alarm that is stored in the alarm information storage unit 12b as described above. An example of data that is stored in the report information storage unit 12c will be described below with reference to FIG. 7. FIG. 7 is a diagram illustrating an example of the report information storage unit 12c of the controller 10 according to one embodiment. In the example illustrated in FIG. 7, the report information storage unit 12c includes items such as a "monitoring target" and a "system report".

The "monitoring target" indicates identification information for identifying a control system that is a monitoring target or a control targe of the controller 10, and is, for example, an identification number or an identification symbol of a plant control system. The "system report" indicates a history of the system alarm that represents an anomaly that has occurred in the control system, and is, for example, a report that indicates, as a history of an alarm that represents a process based on the anomaly that is detected by the detection unit 13b in the processor module P or the input output module M, a history of processes, such as transition to "Fail" indicating a fail state, transition to "Control" indicating a control side, transition to "Stand-By" indicating a stand-by side, an alarm of "Self Diag Error" indicating a self-diagnosis error, or execution of "Copy" indicating data copy. Further, the "system report" is, for example, a report that includes, as a history of an alarm including a message that is based on the anomaly and that is added by the execution unit 13c, a history of the continuous use permission message of "Recover Continuously Usable" or the like.

Specifically, FIG. 7 illustrates an example in which data of a "system alarm #1" is stored, with respect to the monitoring target that is identified by the "control system #1", in the report information storage unit 12c.

### 2-2-3. Control unit 13

The control unit 13 controls the entire controller 10. The control unit 13 includes a collection unit 13a, the detection unit 13b, the execution unit 13c, and the notification unit 13d. Here, the control unit 13 is, for example, a unit that actually performs a process in the duplicated processor module P, and may be implemented by an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

### 2-2-3-1. Collection unit 13a

The collection unit 13a collects various kinds of information. Meanwhile, the collection unit 13a may store various kinds of collected information in the storage unit 12. A data collection process will be described below.

### Data collection process

The collection unit 13a performs the data collection process. For example, the collection unit 13a collects data from a device that is included in the system. At this time, the system is, for example, a plant. Further, the device is, for example, the field devices 30 that are included in the plant. In other words, the collection unit 13a collects, from each of the field devices 30 that are included in the plant, measurement data via each of the input output modules M, for example.

A specific example of the data collection process will be described below. The collection unit 13a collects, as measurement data that is acquired by the field device 30-1 in a "control system #1", "measurement data #1" via an "input output module #1-1" that is the input output module M-1. Further, the collection unit 13a collects, as measurement data that is acquired by the field device 30-2 in the "control system #1", "measurement data #2" via an "input output module #1-2" that is the input output module M-2. Furthermore, the collection unit 13a collects, as measurement data that is acquired by the field device 30-3 in the "control system #1", "measurement data #3" via an "input output module #1-3" that is the input output module M-3.

### 2-2-3-2. Detection unit 15b

A detection unit 15b outputs a detection result. Meanwhile, the detection unit 15b may store the output detection result in the storage unit 12. An anomaly detection process will be described below.

### Anomaly detection process

The detection unit 13b performs the anomaly detection process. For example, the detection unit 13b detects, based on the collected data, an anomaly that has occurred in at least one of the processor module P and the input output module M. At this time, the detection unit 13b detects a temporary anomaly that has occurred in the processor module P. Further, the detection unit 13b detects an internal memory diagnosis anomaly that has occurred in the input output module M.

Here, the temporary anomaly is an anomaly that is likely to be caused by a soft error that occurs in the processor module P or the input output module M of the controller 10, and is an anomaly that is indicated by a specific target code and that is automatically recoverable. Further, the internal memory diagnosis anomaly is an anomaly that is caused by a soft error that occurs in the input output module M of the controller 10, and is an anomaly that is indicated by a specific target code and that is automatically recoverable. Meanwhile, the internal memory diagnosis anomaly may be identified by the controller 10 by performing self-diagnosis (hardware diagnostics).

A specific example of the anomaly detection process in the processor module P will be described. Firstly, the detection unit 13b acquires, as the collected data that is acquired by the collection unit 13a in the "control system #1", the "measurement data #1", the "measurement data #2", and the "measurement data #3". Secondly, the detection unit 13b detects, from the "measurement data #1", the "detected date and time #1" and a "temporary anomaly" as an anomaly that has occurred in a "processor module #A-1" that is a processor module P_{C}-A on the control side. Thirdly, the detection unit 13b refers to the detection result storage unit 12a, and identifies that the "temporary anomaly" that has occurred in the "processor module #A-1" is a first temporary anomaly. Fourthly, the detection unit 13b stores, as a detection result, {detected date and time: "detected date and time #1", detected portion: "processor module #A-1", detected anomaly: "temporary anomaly", detected number of times: "first time"} in the detection result storage unit 12a corresponding to {monitoring target: "control system #1}.

A specific example of the anomaly detection process in the input output module M will be described. Firstly, the detection unit 13b acquires, as data that is collected by the collection unit 13a in the "control system #1", the "measurement data #1", the "measurement data #2", and the "measurement data #3". Secondly, the detection unit 13b detects, from the "measurement data #2", a "detected date and time #3" and a "temporary anomaly", as an anomaly that has occurred in the "input output module #1-2" that is an input output module M_{C}-2 on the control side. Thirdly, the detection unit 13b performs self-diagnosis on the "input output module #1-2", detects presence or absence of a damage of hardware or the like, and identifies that the anomaly that has occurred in the "input output module #1-2" is an "internal memory diagnosis anomaly". Fourthly, the detection unit 13b refers to the detection result storage unit 12a and identifies that the "internal memory diagnosis anomaly" that has occurred in the "input output module #1-2" is a second internal memory diagnosis anomaly. Fifthly, the detection unit 13b stores, as a detection result, {detected date and time: "detected date and time #3", detected portion: "input output module #1-2", detected anomaly: "internal memory diagnosis anomaly", detected number of times: "second time"} in the detection result storage unit 12a corresponding to {monitoring target: "control system #1}.

### 2-2-3-3. Execution unit 13c

The execution unit 13c performs various kinds of processes. Meanwhile, the execution unit 13c may store an output execution result in the storage unit 12. In the following, an alarm information output process, a report information output process, and an action execution process will be described.

### Alarm information output process

The execution unit 13c performs the alarm information output process. For example, the execution unit 13c outputs an alarm that indicates a detected anomaly. At this time, when detecting a temporary anomaly in the processor module P, the execution unit 13c outputs a system alarm of the temporary anomaly. Further, when detecting an internal memory diagnosis anomaly in the input output module M, the execution unit 13c outputs a system alarm of the internal memory diagnosis anomaly.

A specific example of the alarm information output process in the processor module P will be described below. Firstly, the execution unit 13c refers to {detected date and time: "detected date and time #1", detected portion: "processor module #A-1", detected anomaly: "temporary anomaly", detected number of times: "first time"} as a detection result that is stored in the detection result storage unit 12a. Secondly, the execution unit 13c refers to the storage unit 12 and outputs a "system alarm #A-1" that includes a code corresponding to the "temporary anomaly" and each of processes based on the "temporary anomaly". Thirdly, the execution unit 13c stores {detected date and time: "detected date and time #1", system alarm: "system alarm #A-1"} in the alarm information storage unit 12b that corresponds to {monitoring target: "control system #1}.

A specific example of the alarm information output process in the input output module M will be described below. Firstly, the execution unit 13c refers to {detected date and time: "detected date and time #1", detected portion: "input output module #1-2", detected anomaly: "internal memory diagnosis anomaly", detected number of times: "second time"} as a detection result that is stored in the detection result storage unit 12a. Secondly, the execution unit 13c refers to the storage unit 12, and outputs a "system alarm #1-2" that includes a code corresponding to the "internal memory diagnosis anomaly" and each of processes based on the "internal memory diagnosis anomaly". Thirdly, {detected date and time: "detected date and time #3", system alarm: "system alarm #1-2"} is stored in the alarm information storage unit 12b that corresponds to {monitoring target: "control system #1}.

### Report information output process

The execution unit 13c performs the report information output process. For example, the execution unit 13c outputs a report that indicates a history of the alarm. At this time, when detecting a temporary anomaly in the processor module P, the execution unit 13c outputs a system report that indicates the history of the system alarm of the temporary anomaly. Further, when detecting an internal memory diagnosis anomaly in the input output module M, the execution unit 13c outputs a system report that indicates the history of the system alarm of the internal memory diagnosis anomaly.

A specific example of the report information output process in the processor module P will be described. The execution unit 13c refers to alarm information that is stored in the alarm information storage unit 12b and that is for the processor module P, and stores {detected date and time: "detected date and time #1", system alarm: "system alarm #A-1"} in the report information storage unit 12c corresponding to {monitoring target: "control system #1}. Similarly, the execution unit 13c refers to the alarm information that is stored in the alarm information storage unit 12b and that is for the processor module P, and stores {detected date and time: "detected date and time #4", system alarm: "system alarm #B-1"} in the report information storage unit 12c corresponding to {monitoring target: "control system #1}.

A specific example of the report information output process in the input output module M will be described. The execution unit 13c refers to the alarm information that is stored in the alarm information storage unit 12b and that is for the input output module M, and stores {detected date and time: "detected date and time #2", system alarm: "system alarm #1-2"} in the report information storage unit 12c corresponding to {monitoring target: "control system #1}. Similarly, the execution unit 13c refers to the alarm information that is stored in the alarm information storage unit 12b and that is for the input output module M, and stores {detected date and time: "detected date and time #3", system alarm: "system alarm #1-2"} in the report information storage unit 12c corresponding to {monitoring target: "control system #1}.

### Action execution process

The execution unit 13c performs the action execution process. For example, when the detected anomaly is likely to be caused by a soft error, the execution unit 13c executes an action on an alarm that indicates the anomaly. At this time, when detecting a temporary anomaly in the processor module P, the execution unit 13c executes masking on an alarm that indicates the temporary anomaly. Further, when detecting a temporary anomaly in the processor module P, the execution unit 13c adds a message indicating that continuous use is permitted to the alarm. Furthermore, when detecting an internal memory diagnosis anomaly in the input output module M, the execution unit 13c executes masking on an alarm that indicates the internal memory diagnosis anomaly. Moreover, when detecting an internal memory diagnosis anomaly in the input output module M, the execution unit 13c adds a message indicating that continuous use is permitted to the alarm.

A specific example of the action execution process in the processor module P will be described. Firstly, the execution unit 13c refers to {detected date and time: "detected date and time #1", detected portion: "processor module #A-1", detected anomaly: "temporary anomaly", detected number of times: "first time"} as a detection result that is stored in the detection result storage unit 12a. Secondly, the execution unit 13c refers to {detected date and time: "detected date and time #1", system alarm: "system alarm #A-1"} as an alarm that is stored in the alarm information storage unit 12b. Thirdly, the execution unit 13c refers to the storage unit 12 and identifies that an alarm mask function that is set by the engineer E is "enabled". Fourthly, the execution unit 13c refers to the storage unit 12 and identifies that a continuous use permission message adding function that is set by the engineer E is "enabled". Fifthly, the execution unit 13c refers to {number of detections: "first time"} and identifies that the "system alarm #A-1" is an execution target of the alarm mask. Sixthly, the execution unit 13c executes the alarm mask on the "system alarm #A-1". Seventhly, the execution unit 13c adds a "continuous use permission message #A-1" to the "system alarm #A-1". Eighthly, the execution unit 13c stores {detected date and time: "detected date and time #1", system alarm: "system alarm #A-1", alarm mask: "○", continuous use permission message: "continuous use permission message #A-1"} in the alarm information storage unit 12b.

A specific example of the action execution process in the input output module M will be described. Firstly, the execution unit 13c refers to {detected date and time: "detected date and time #3", detected portion: "input output module #1-2", detected anomaly: "internal memory diagnosis anomaly", detected number of times: "second time"} as a detection result that is stored in the detection result storage unit 12a. Secondly, the execution unit 13c refers to {detected date and time: "detected date and time #3", system alarm: "system alarm #1-2"} as an alarm that is stored in the alarm information storage unit 12b. Thirdly, the execution unit 13c refers to the storage unit 12 and identifies that the alarm mask function that is set by the engineer E is "enabled". Fourthly, the execution unit 13c refers to the storage unit 12 and identifies that the continuous use permission message adding function that is set by the engineer E is "enabled". Fifthly, the execution unit 13c refers to {number of detections: "second time"} and identifies that the "system alarm #1-2" is not an execution target of the alarm mask. Sixthly, the execution unit 13c adds a "continuous use permission message #1-2" to the "system alarm #1-2". Seventhly, the execution unit 13c stores {detected date and time: "detected date and time #3", system alarm: "system alarm #1-2", alarm mask: "-", continuous use permission message: "continuous use permission message #1-2"} in the alarm information storage unit 12b.

### 2-2-3-4. Notification unit 13d

The notification unit 13d gives a notice of various kinds of information. Meanwhile, the notification unit 13d may refer to various kinds of information that are stored in the storage unit 12. In the following, an alarm information transmission process and an alarm information retransmission process will be described.

### Alarm information transmission process

The notification unit 13d performs the alarm information transmission process. For example, the notification unit 13d transmits alarm information to the user the terminal and notifies the user of the alarm on which the action is executed. Further, when a temporary anomaly that has occurred in the processor module P is detected, the notification unit 13d notifies the user of the alarm on which the masking is executed. Furthermore, when a second or subsequent temporary anomaly is detected in the same processor module P, the notification unit 13d notifies the user of the alarm on which the masking is not executed. Moreover, when a temporary anomaly that has occurred in the processor module P is detected, the notification unit 13d notifies the user of an alarm to which a message indicating that continuous use is permitted is added.

When an internal memory diagnosis anomaly that has occurred in the input output module M is detected, the notification unit 13d notifies the user of the alarm on which the masking is executed. Furthermore, when a second or subsequent internal memory diagnosis anomaly is detected in the same input output module M, the notification unit 13d notifies the user of the alarm on which the masking is not executed. Moreover, when an internal memory diagnosis anomaly that has occurred in the input output module M is detected, the notification unit 13d notifies the user of an alarm to which a message indicating that continuous use is permitted is added.

A specific example of the alarm information transmission process in the processor module P will be described. The notification unit 13d refers to {detected date and time: "detected date and time #1", system alarm: "system alarm #A-1", alarm mask: "O", continuous use permission message: "continuous use permission message #A-1"} as the alarm information that is stored in the alarm information storage unit 12b, and transmits the referred alarm information to the engineer terminal 20.

A specific example of the alarm information transmission process in the input output module M will be described. Firstly, the notification unit 13d refers to {detected date and time: "detected date and time #3", system alarm: "system alarm #1-2", alarm mask: "-", continuous use permission message: "continuous use permission message #1-2"} as the alarm information that is stored in the alarm information storage unit 12b, and transmits the referred alarm information to the engineer terminal 20.

### Alarm information retransmission process

The notification unit 13d performs the alarm information retransmission process. For example, when recovery from the temporary anomaly that has occurred in the processor module P is unsuccessful, the notification unit 13d notifies the user of the alarm on which the masking is not executed. Furthermore, when recovery from the internal memory diagnosis anomaly that has occurred in the input output module M is unsuccessful, the notification unit 13d notifies the user of the alarm on which the masking is not executed.

A specific example of the alarm information retransmission process in the processor module P will be described. When recovery from the temporary anomaly that has occurred in the processor module P is unsuccessful, the notification unit 13d refers to {detected date and time: "detected date and time #1", system alarm: "system alarm #A-1", alarm mask: "○", continuous use permission message: "continuous use permission message #A-1"} as the alarm information that is stored in the alarm information storage unit 12b, and re-transmits alarm information that does not include {alarm mask: "O", continuous use permission message: "continuous use permission message #A-1"} among pieces of the referred alarm information to the engineer terminal 20.

A specific example of the alarm information retransmission process in the input output module M will be described. When recovery from the internal memory diagnosis anomaly that has occurred in the input output module M is unsuccessful, the notification unit 13d refers to {detected date and time: "detected date and time #3", system alarm: "system alarm #1-2", alarm mask: "-", continuous use permission message: "continuous use permission message #1-2"} as the alarm information that is stored in the alarm information storage unit 12b, and re-transmits alarm information that does not include {alarm mask: "-", continuous use permission message: "continuous use permission message #1-2"} among pieces of the referred alarm information to the engineer terminal 20.

### 2-3. Configuration example and process example of engineer terminal 20

A configuration example and a process example of the engineer terminal 20 will be described below with reference to FIG. 4. The engineer terminal 20 is an administrator terminal that is used by the engineer E who is an administrator of the anomaly monitoring system 100, and includes an input output unit 21, a control unit 22, and a communication unit 23.

### 2-3-1. Input output unit 21

The input output unit 21 controls input of various kinds of information to the engineer terminal 20. For example, the input output unit 21 is implemented by a mouse, a keyboard, a touch panel, or the like, and receives input of setting information or the like to the engineer terminal 20. Further, the input output unit 21 displays various kinds of information from the engineer terminal 20. For example, the input output unit 21 is implemented by a display or the like, and displays setting information or the like that is stored in the engineer terminal 20.

The input output unit 21 displays a system alarm view that is a screen to be viewed by the engineer E and that displays a system alarm. Meanwhile, details of the system alarm view will be described later in the section 3. Specific example of each of processes of the anomaly monitoring system 100. Further, the input output unit 21 displays a historical message report window that is a screen to be viewed by the engineer E and that displays a system report. Meanwhile, details of the historical message report window will be described later in the section 3. Specific example of each of processes of the anomaly monitoring system 100.

### 2-3-2. Control unit 22

The control unit 22 transmits various kinds of information. For example, the control unit 22 transmits alarm mask function setting that indicates presence or absence of an alarm mask and that is input by the engineer E, a continuous use permission message adding function that indicates addition or non-addition of the continuous use permission message, or the like to the controller 10.

The control unit 22 receives various kinds of information. For example, the control unit 22 receives, from the controller 10, alarm information, report information, or the like that is displayed by the input output unit 21.

### 2-3-3. Communication unit 23

The communication unit 23 controls data communication with a different apparatus. For example, the communication unit 23 performs data communication with each of communication apparatuses via a router or the like. Further, the communication unit 23 is able to perform data communication with an operator terminal (not illustrated).

### 2-4. Configuration example and process example of field device 30

A configuration example and a process example of the field device 30 will be described. The field device 30 is a device that is included in the system. For example, the field device 30 is a device that is included in a plant and a measurement device, such as a pressure gauge, a flow meter, or a vibration meter.

The field device 30 acquires data in the system. For example, the field device 30 acquires measurement data, such as pressure, a flow rate, or vibration, of the plant. Further, the field device 30 transmits the acquired measurement data to the controller 10 via the input output module M.

The field device 30 receives a control signal in the system. For example, the field device 30 receives, via the input output module M, the control signal that is transmitted by the controller 10.

### 3. Specific examples of each of processes of anomaly monitoring system 100

Specific examples of each of the processes of the anomaly monitoring system 100 according to one embodiment will be described below with reference to FIG. 8 to FIG. 17. In the following, a specific example 1 to a specific example 4 of each of the processes of the anomaly monitoring system 100 will be described below.

### 3-1. Specific example 1

The specific example 1 of each of the processes of the anomaly monitoring system 100 will be described below with reference to FIG. 8. FIG. 8 is a diagram illustrating the specific example 1 of each of the processes of the anomaly monitoring system 100 according to one embodiment. In the following, a state and transition of the processor module P of the controller 10 will be described.

### 3-1-1. "Fail"

As illustrated in an example in FIG. 8(1), when an anomaly is detected in the processor module P, the controller 10 indicates a state of "Fail" that is a stopped state, and notifies the engineer E of an alarm of "Fail". At this time, when automatic restart is executed from the stopped state, the controller 10 transitions to a state of "Hard Ready" that is a hardware activation ready state (see FIG. 8(2)).

### 3-1-2. "Hard Ready"

As illustrated in an example in FIG. 8(2), when preparation for hardware activation is ready, the controller 10 indicates a state of "Hard Ready" that is the hardware activation ready state, and notifies the engineer E of an alarm of "Hard Ready". At this time, when an anomaly is detected in the processor module P, the controller 10 transitions to the state of "Fail" that is the stopped state (see FIG. 8(1)). Further, when the processor module P transfers to the control side, the controller 10 transitions to a state of "Control" that is a control state (see FIG. 8(3)). Furthermore, when the processor module P transfers to the stand-by side, the controller 10 transitions to a state of "Stand-By" that is a stand-by state (see FIG. 8(4)).

### 3-1-3. "Control"

As illustrated in an example in FIG. 8(3), when the processor module P transfers to the control side, the controller 10 indicates the state of "Control" that is the control state and notifies the engineer E of an alarm of "Control". At this time, when an anomaly is detected in the processor module P, the controller 10 transitions to the state of "Fail" that is the stopped state (see FIG. 8(1)).

### 3-1-4. "Stand-By"

As illustrated in an example in FIG. 8(4), when the processor module P transfers to the stand-by side, the controller 10 indicates the state of "Stand-by" that is the stand-by state and notifies the engineer E of an alarm of "Stand-By". At this time, when an anomaly is detected in the processor module P, the controller 10 transitions to the state of "Fail" that is the stopped state (see FIG. 8(1)). Further, when the processor module P transfers to the control side, the controller 10 transitions to the state of "Control" that is the control state (see FIG. 8(3)).

### 3-2. Specific example 2

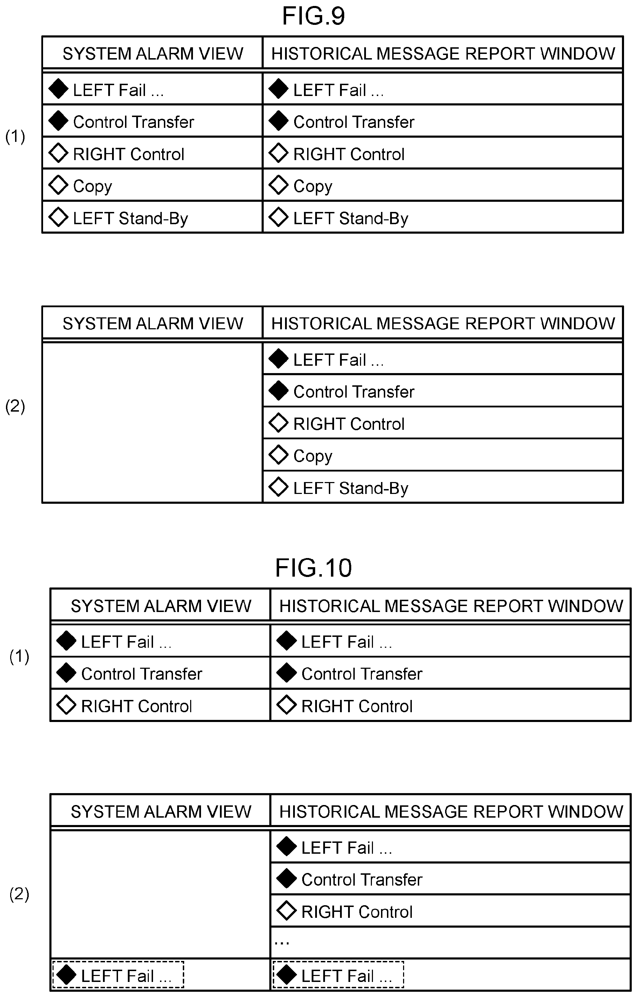

A specific example 2 of each of the processes of the anomaly monitoring system 100 will be described below with reference to FIG. 9 to FIG. 13. In the following, the system alarm view and the historical message report window for a temporary anomaly in the processor module P of the controller 10 will be described.

### 3-2-1. Specific example 2-1

A specific example 2-1 of each of the processes of the anomaly monitoring system 100 will be described below with reference to FIG. 9. FIG. 9 is a diagram illustrating the specific example 2-1 of each of the processes of the anomaly monitoring system 100 according to one embodiment. In the following, a display screen of the system alarm view and the historical message report window for a temporary anomaly in the processor module P of the controller 10, and a display example of a case in which recovery by automatic restart is successful after occurrence of a first temporary anomaly will be described.

As illustrated in an example of a "system alarm view" in FIG. 9(1), when an anomaly is detected in the processor module P and when the alarm mask function setting is disabled, the engineer terminal 20 displays a system alarm for which an alarm mask is not executed. In the example of the "system alarm view" in FIG. 9(1), the engineer terminal 20 displays alarms in order of "LEFT Fail ..." (the left CPU is in the fail state), "Control Transfer" (the control CPU is transferring), "RIGHT Control" (the right CPU is in the control state), "Copy" (data copy is in progress), and "LEFT Stand-By" (the left CPU is in the stand-by state). Meanwhile, a black diamond at the top of each of the alarms indicates a state before recovery or during recovery from the temporary anomaly. Further, a white diamond at the top of each of the alarms indicates a state after recovery from the temporary anomaly.

As illustrated in an example of a "historical message report window" in FIG. 9(1), the engineer terminal 20 displays a system repot with the same content as the system alarm for which the alarm mask is not executed.

As illustrated in an example of a "system alarm view" in FIG. 9(2), when an anomaly is detected in the processor module P and when the alarm mask function setting is enabled, the engineer terminal 20 displays a system alarm on which the alarm mask is executed. In the example of the "system alarm view" in FIG. 9(2), the "system alarm view" in FIG. 9(1) is hidden.

As illustrated in an example of a "historical message report window" in FIG. 9(2), the engineer terminal 20 displays a system repot with the same content as the system alarm for which the alarm mask is not executed.

As described above, when a first temporary anomaly has occurred in the processor module P and when the alarm mask function setting is enabled, the controller 10 hides the system alarm to reduce handling of an alarm by the engineer E. Further, the controller 10 sets the system report to a viewable state to allow the engineer E to handle an alarm if needed. Meanwhile, the controller 10 is not able to determine whether or not a temporary anomaly that has occurred in the processor module P is an anomaly that is caused by a soft error, and therefore, executes all alarm masks when a first temporary anomaly has occurred in the processor module P.

### 3-2-2. Specific example 2-2

A specific example 2-2 of each of the processes of the anomaly monitoring system 100 will be described below with reference FIG. 10. FIG. 10 is a diagram illustrating a specific example 2-2 of each of the processes of the anomaly monitoring system 100 according to one embodiment. In the following, a display screen of the system alarm view and the historical message report window for a temporary anomaly in the processor module P of the controller 10, and a first display example of a case in which recovery by automatic restart is unsuccessful after occurrence of a first temporary anomaly will be described.

As illustrated in an example of a "system alarm view" in FIG. 10(1), when an anomaly is detected in the processor module P and when the alarm mask function setting is disabled, the engineer terminal 20 display a system alarm for which the alarm mask is not executed. In the example of the "system alarm view" in FIG. 10(1), the engineer terminal 20 displays alarms in order of "LEFT Fail ..." (the left CPU is in the fail state), "Control Transfer" (the control CPU is transferring), and "RIGHT Control" (the right CPU is in the control state). Meanwhile, a black diamond at the top of each of the alarms indicates a state before recovery or during recovery from the temporary anomaly, the temporary anomaly. Further, a white diamond at the top of each of the alarms indicates a state after recovery from the temporary anomaly.

As illustrated in an example of a "historical message report window" in FIG. 10(1), the engineer terminal 20 displays a system repot with the same content as the system alarm for which the alarm mask is not executed.

As illustrated in an example of a "system alarm view" in FIG. 10(2), when an anomaly is detected in the processor module P, when the alarm mask function setting is enabled, and when recovery by automatic restart is unsuccessful, the engineer terminal 20 displays a system alarm on which the alarm mask is executed and displays a system alarm of occurrence of an anomaly. In the example of the "system alarm view" in FIG. 10(2), the "system alarm view" in FIG. 10(1) is hidden and the alarm of "LEFT Fail ..." (the left CPU is in the fail state) is re-notified and displayed (see a dashed rectangle in the "system alarm view" in FIG. 10(2)).

As illustrated in an example of a "historical message report window" in FIG. 10(2), the engineer terminal 20 displays a system repot with the same content as the system alarm for which the alarm mask is not executed, and the alarm of "LEFT Fail ..." (the left CPU is in the fail state) is re-notified and displayed (see a dashed rectangle in the "historical message report window" in FIG. 10(2)).

As described above, when a first temporary anomaly has occurred in the processor module P, when the alarm mask function setting is enabled, and when recovery by automatic restart is unsuccessful, the controller 10 displays a system alarm on which the alarm mask is executed and displays a system alarm of occurrence of an anomaly to notify the engineer E that the alarm needs to be handled. Further, the controller 10 sets a system report to a viewable state to allow the engineer E to handle the alarm if needed.

### 3-2-3. Specific example 2-3

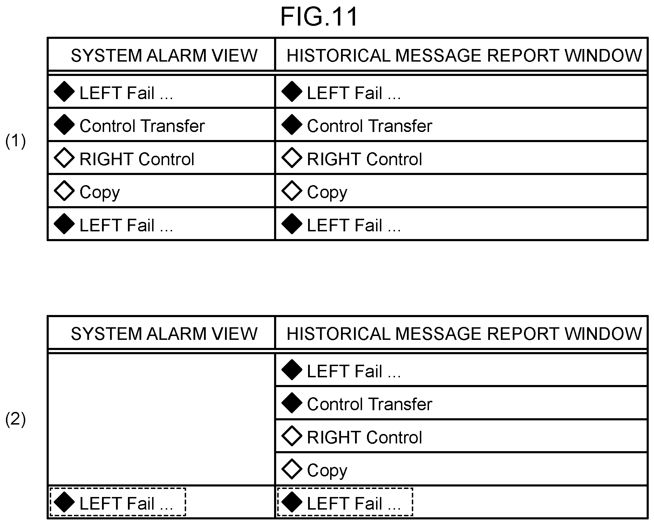

A specific example 2-3 of each of the processes of the anomaly monitoring system 100 will be described below with reference to FIG. 11. FIG. 11 is a diagram illustrating the specific example 2-3 of each of the processes of the anomaly monitoring system 100 according to one embodiment. In the following, a display screen of the system alarm view and the historical message report window for a temporary anomaly in the processor module P of the controller 10, and a second display example of a case in which recovery by automatic restart is unsuccessful after occurrence of a first temporary anomaly will be described.

As illustrated in an example of a "system alarm view" in FIG. 11(1), when an anomaly is detected in the processor module P and the alarm mask function setting is disabled, the engineer terminal 20 displays a system alarm for which the alarm mask is not executed. In the example of the "system alarm view" in FIG. 11(1), the engineer terminal 20 displays alarms in order of "LEFT Fail ..." (the left CPU is in the fail state), "Control Transfer" (the control CPU is transferring), "RIGHT Control" (the right CPU is in the control state), "Copy" (data copy is in progress), and "LEFT Fail ..." (the left CPU is in the fail state). Meanwhile, a black diamond at the top of each of the alarms indicates a state before recovery or during recovery from the temporary anomaly. Further, a white diamond at the top of each of the alarms indicates a state after recovery from the temporary anomaly.

As illustrated in an example of a "historical message report window" in FIG. 11(1), the engineer terminal 20 displays a system repot with the same content as the system alarm for which the alarm mask is not executed.

As illustrated in an example of a "system alarm view" in FIG. 11(2), when an anomaly is detected in the processor module P, when the alarm mask function setting is enabled, and when recovery by automatic restart is unsuccessful, the engineer terminal 20 displays a system alarm on which the alarm mask is executed and displays a system alarm of occurrence of an anomaly. In the example of the "system alarm view" in FIG. 11(2), the "system alarm view" in FIG. 11(1) is hidden and the alarm of "LEFT Fail ..." (the left CPU is in the fail state) is re-notified and displayed (see a dashed rectangle in the "system alarm view" in FIG. 11(2)).

As illustrated in an example of a "historical message report window" in FIG. 11(2), the engineer terminal 20 displays a system repot with the same content as the system alarm for which the alarm mask is not executed, and the alarm of "LEFT Fail ..." (the left CPU is in the fail state) is re-notified and displayed (see a dashed rectangle in the "historical message report window" in FIG. 11(2)).

As described above, when a first temporary anomaly has occurred in the processor module P, when the alarm mask function setting is enabled, and when recovery by automatic restart is unsuccessful, the controller 10 displays a system alarm on which the alarm mask is executed and displays a system alarm of occurrence of an anomaly to notify the engineer E that the alarm needs to be handled. Further, the controller 10 sets a system report to a viewable state to allow the engineer E to handle the alarm if needed.

### 3-2-4. Specific example 2-4

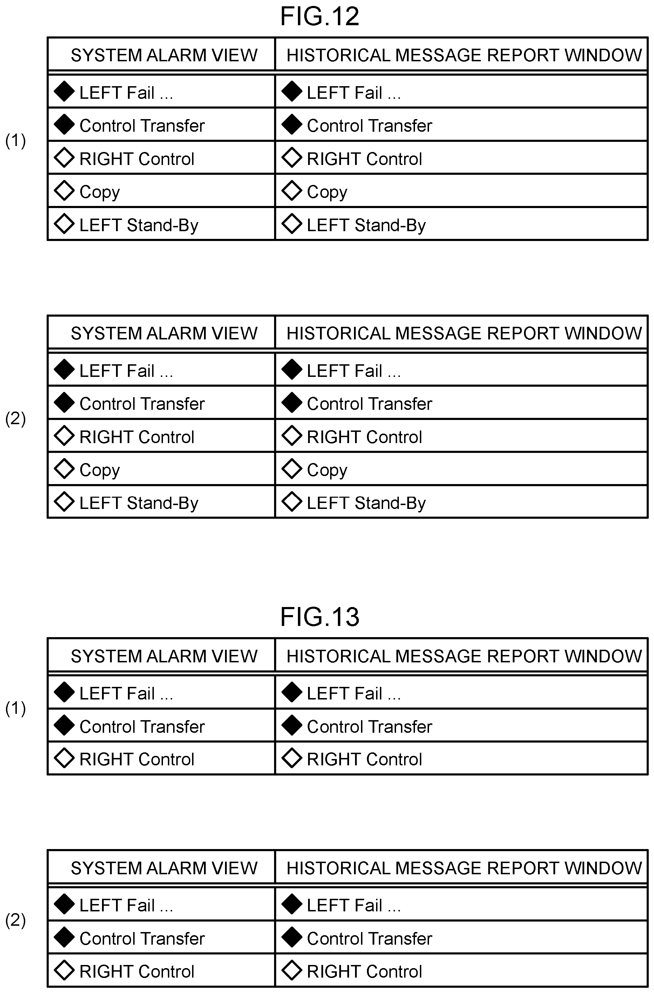

A specific example 2-4 of each of the processes of the anomaly monitoring system 100 will be described below with reference to FIG. 12. FIG. 12 is a diagram illustrating the specific example 2-4 of each of the processes of the anomaly monitoring system 100 according to one embodiment. In the following, a display screen of the system alarm view and the historical message report window for a temporary anomaly in the processor module P of the controller 10, and a display example of a case in which recovery by automatic restart is successful after occurrence of a second or subsequent temporary anomaly will be descried.

As illustrated in an example of a "system alarm view" in FIG. 12(1), when an anomaly is detected in the processor module P and when the alarm mask function setting is disabled, the engineer terminal 20 displays a system alarm for which the alarm mask is not executed. In the example of the "system alarm view" in FIG. 12(1), the engineer terminal 20 displays alarms in order of "LEFT Fail ..." (the left CPU is in the fail state), "Control Transfer" (the control CPU is transferring), "RIGHT Control" (the right CPU is in the control state), "Copy" (data copy is in progress), and "LEFT Stand-By" (the left CPU is in the stand-by state). Meanwhile, a black diamond at the top of each of the alarms indicates a state before recovery or during recovery from the temporary anomaly, the temporary anomaly. Further, a white diamond at the top of each of the alarms indicates a state after recovery from the temporary anomaly.

As illustrated in an example of a "historical message report window" in FIG. 12(1), the engineer terminal 20 displays a system repot with the same content as the system alarm for which the alarm mask is not executed.

As illustrated in an example of a "system alarm view" in FIG. 12(2), when an anomaly is detected in the processor module P, when the alarm mask function setting is enabled, when recovery by automatic restart is successful, and when the anomaly is a second or subsequent temporary anomaly, the engineer terminal 20 displays a system alarm for which the alarm mask is not executed. In the example of the "system alarm view" in FIG. 12(2), the "system alarm view" in FIG. 12(1) is displayed.

As illustrated in an example of a "historical message report window" in FIG. 12(2), the engineer terminal 20 displays a system repot with the same content as the system alarm for which the alarm mask is not executed.

As described above, when a second or subsequent temporary anomaly has occurred in the processor module P, the controller 10 displays a system alarm even if recovery by automatic restart is successful to notify the engineer E that the alarm needs to be handled if needed. Further, the controller 10 sets a system report to a viewable state to allow the engineer E to handle the alarm if needed.

### 3-2-5. Specific example 2-5

A specific example 2-5 of each of the processes of the anomaly monitoring system 100 will be described below with reference to FIG. 13. FIG. 13 is a diagram illustrating the specific example 2-5 of each of the processes of the anomaly monitoring system 100 according to one embodiment. In the following, a display screen of the system alarm view and the historical message report window for a temporary anomaly in the processor module P of the controller 10, and a display example of a case in which recovery by automatic restart is unsuccessful after occurrence of a second or subsequent temporary anomaly will be descried.

As illustrated in an example of a "system alarm view" in FIG. 13(1), when an anomaly is detected in the processor module P and when the alarm mask function setting is disabled, the engineer terminal 20 displays a system alarm for which the alarm mask is not executed. In the example of the "system alarm view" in FIG. 13(1), the engineer terminal 20 displays alarms in order of "LEFT Fail ..." (the left CPU is in the fail state), "Control Transfer" (the control CPU is transferring), and "RIGHT Control" (the right CPU is in the control state). Meanwhile, a black diamond at the top of each of the alarms indicates a state before recovery or during recovery from the temporary anomaly, the temporary anomaly. Further, a white diamond at the top of each of the alarms indicates a state after recovery from the temporary anomaly.

As illustrated in an example of a "historical message report window" in FIG. 13(1), the engineer terminal 20 displays a system repot with the same content as the system alarm for which the alarm mask is not executed.

As illustrated in an example of a "system alarm view" in FIG. 13(2), when an anomaly is detected in the processor module P, when the alarm mask function setting is enabled, when recovery by automatic restart is unsuccessful, and when the anomaly is a second or subsequent temporary anomaly, the engineer terminal 20 displays a system alarm for which the alarm mask is not executed. In the example of the "system alarm view" in FIG. 13(2), the "system alarm view" in FIG. 13(1) is displayed.

As illustrated in an example of a "historical message report window" in FIG. 13(2), the engineer terminal 20 displays a system repot with the same content as the system alarm for which the alarm mask is not executed.

As described above, when a second or subsequent temporary anomaly has occurred in the processor module P and when recovery by automatic restart is unsuccessful, the controller 10 displays a system alarm to notify the engineer E that the alarm needs to be handled. Further, the controller 10 sets a system report to a viewable state to allow the engineer E to handle the alarm if needed.

### 3-3. Specific example 3

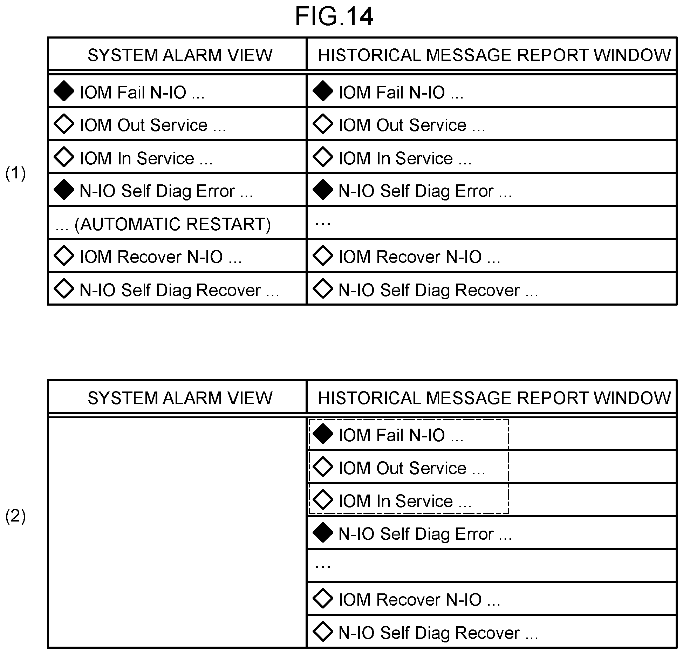

A specific example 3 of each of the processes of the anomaly monitoring system 100 will be described below with reference to FIG. 14 to FIG. 16. In the following, the system alarm view and the historical message report window for a temporary anomaly in the input output module M of the controller 10 will be described.

### 3-3-1. Specific example 3-1

A specific example 3-1 of each of the processes of the anomaly monitoring system 100 will be described below with reference to FIG. 14. FIG. 14 is a diagram illustrating the specific example 3-1 of each of the processes of the anomaly monitoring system 100 according to one embodiment. In the following, a display screen of the system alarm view and the historical message report window for a temporary anomaly in the input output module M of the controller 10, and a display example of a case in which recovery by automatic restart is successful after occurrence of a first internal memory diagnosis anomaly will be described.

As illustrated in an example of a "system alarm view" in FIG. 14(1), when an anomaly is detected in the input output module M and when the alarm mask function setting is disabled, the engineer terminal 20 displays a system alarm for which the alarm mask is not executed. In the example of the "system alarm view" in FIG. 14(1), the engineer terminal 20 displays alarms in order of "IOM Fail N-IO ..." (a bus node IOM is in the fail state), "IOM Out Service ..." (IOM is unavailable), "IOM In Service ..." (IOM is available), "N-IO Self Diag Error ..." (bus node self-diagnosis error), "IOM Recover N-IO ..." (the bus node IOM is recovered), and "N-IO Self Diag Recover ..." (bus node self-diagnosis recovery). Meanwhile, a black diamond at the top of each of the alarms indicates a state before recovery or during recovery from the temporary anomaly, the temporary anomaly. Further, a white diamond at the top of each of the alarms indicates a state after recovery from the temporary anomaly.

As illustrated in an example of a "historical message report window" in FIG. 14(1), the engineer terminal 20 displays a system repot with the same content as the system alarm for which the alarm mask is not executed.

As illustrated in an example of a "historical message report window" in FIG. 14(2), when an anomaly is detected in the input output module M and when the alarm mask function setting is enabled, the engineer terminal 20 displays a system alarm on which the alarm mask is executed. At this time, the controller 10 determines whether or not the temporary anomaly is the internal memory diagnosis anomaly by using a self-diagnosis function, and executes the alarm mask when the temporary anomaly is the internal memory diagnosis anomaly. In the example of the "system alarm view" in FIG. 14(2), the "system alarm view" in FIG. 14(1) is hidden.

As illustrated in an example of a "historical message report window" in FIG. 14(2), the engineer terminal 20 displays a system repot with the same content as the system alarm for which the alarm mask is not executed. Meanwhile, in the case of an anomaly that is indicated by a specific code in the input output module M, the controller 10 delays a notification of alarms indicated by a dash-dotted rectangle until determination on whether or not the anomaly is the internal memory diagnosis anomaly is completed.

As described above, when a first internal memory diagnosis anomaly has occurred in the input output module M and when the alarm mask function setting is enabled, the controller 10 hides the system alarm to reduce handling of an alarm by the engineer E. Further, the controller 10 sets the system report to a viewable state to allow the engineer E to handle an alarm if needed. Meanwhile, the controller 10 is able to determine, by hardware diagnostics, whether or not a temporary anomaly that has occurred in the input output module M is an anomaly that is caused by a soft error, and therefore, executes the alarm mask only when a first internal memory diagnosis anomaly has occurred in the input output module M, that is, only when an anomaly that is caused by a soft error has occurred.

### 3-3-2. Specific example 3-2

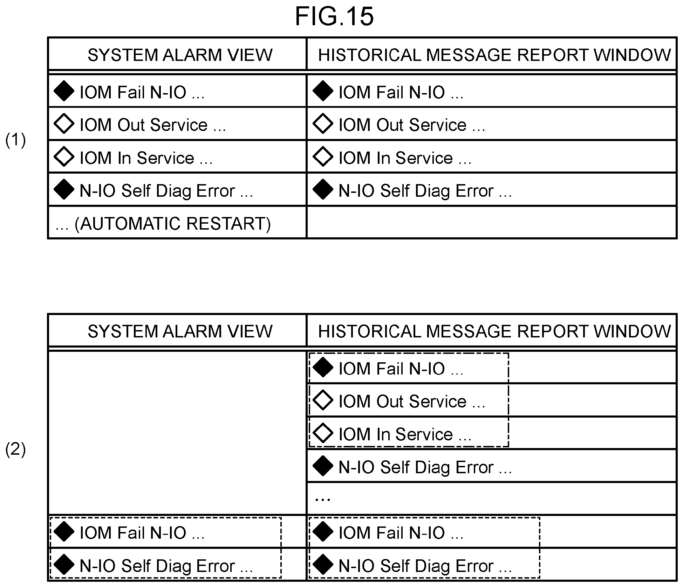

A specific example 3-2 of each of the processes of the anomaly monitoring system 100 will be described below with reference FIG. 15. FIG. 15 is a diagram illustrating a specific example 3-2 of each of the processes of the anomaly monitoring system 100 according to one embodiment. In the following, a display screen of the system alarm view and the historical message report window for a temporary anomaly in the input output module M of the controller 10, and a display example of a case in which recovery by automatic restart is unsuccessful after occurrence of a first temporary anomaly.

As illustrated in an example of a "system alarm view" in FIG. 15(1), when an anomaly is detected in the input output module M and the alarm mask function setting is disabled, the engineer terminal 20 displays a system alarm for which the alarm mask is not executed. In the example of the "system alarm view" in FIG. 15(1), the engineer terminal 20 displays alarms in order of "IOM Fail N-IO ..." (the bus node IOM is in the fail state), "IOM Out Service ..." (IOM is unavailable), "IOM In Service ..." (IOM is available), and "N-IO Self Diag Error ..." (bus node self-diagnosis error). Meanwhile, a black diamond at the top of each of the alarms indicates a state before recovery or during recovery from the temporary anomaly. Further, a white diamond at the top of each of the alarms indicates a state after recovery from the temporary anomaly.

As illustrated in an example of a "historical message report window" in FIG. 15(1), the engineer terminal 20 displays a system repot with the same content as the system alarm for which the alarm mask is not executed.

As illustrated in an example of a "system alarm view" in FIG. 15(2), when an anomaly is detected in the input output module M, when the alarm mask function setting is enabled, and when recovery by automatic restart is unsuccessful, the engineer terminal 20 displays a system alarm on which the alarm mask is executed and displays a system alarm of occurrence of an anomaly. In the example of the "system alarm view" in FIG. 15(2), the "system alarm view" in FIG. 15(1) is hidden state and alarms of "IOM Fail N-IO ..." (the bus node IOM is in the fail state) and "N-IO Self Diag Error ..." (bus node self-diagnosis error) are notified and displayed (see a dashed rectangle in the "system alarm view" in FIG. 15(2)).

As illustrated in an example of a "historical message report window" in FIG. 15(2), the engineer terminal 20 displays a system repot with the same content as the system alarm for which the alarm mask is not executed, and alarms of "IOM Fail N-IO ..." (the bus node IOM is in the fail state) and "N-IO Self Diag Error ..." (bus node self-diagnosis error) notified and displayed (see a dashed rectangle in the "historical message report window" in FIG. 15(2)). Meanwhile, in the case of an anomaly that is indicated by a specific code in the input output module M, the controller 10 delays a notification of alarms indicated by a dash-dotted rectangle until determination on whether or not the anomaly is the internal memory diagnosis anomaly is completed.

As described above, when a first internal memory diagnosis anomaly has occurred in the input output module M, when the alarm mask function setting is enabled, and when recovery by automatic restart is unsuccessful, the controller 10 displays a system alarm on which the alarm mask is executed and displays a system alarm of occurrence of an anomaly to notify the engineer E that the alarm needs to be handled. Further, the controller 10 sets a system report to a viewable state to allow the engineer E to handle the alarm if needed.

### 3-3-3. Specific example 3-3

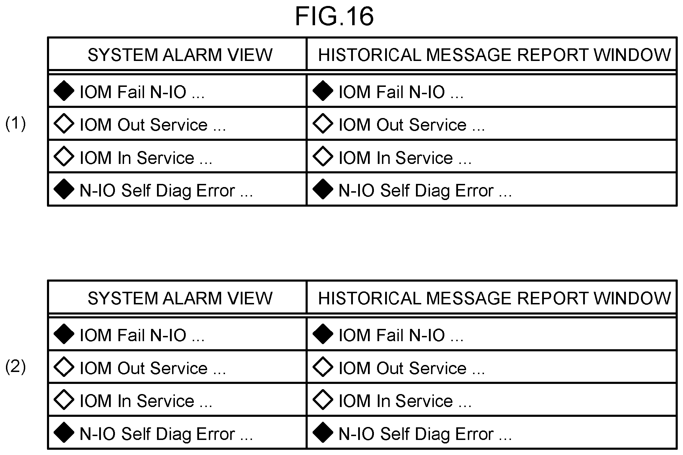

A specific example 3-3 of each of the processes of the anomaly monitoring system 100 will be described below with reference to FIG. 16. FIG. 16 is a diagram illustrating the specific example 3-3 of each of the processes of the anomaly monitoring system 100 according to one embodiment. In the following, a display screen of the system alarm view and the historical message report window for a temporary anomaly in the input output module M of the controller 10, and a display example of a case in which automatic restart is not performed after occurrence of a second internal memory diagnosis anomaly will be described.

As illustrated in an example of a "system alarm view" in FIG. 16(1), when an anomaly is detected in the input output module M and the alarm mask function setting is disabled, the engineer terminal 20 displays a system alarm for which the alarm mask is not executed. In the example of the "system alarm view" in FIG. 16(1), the engineer terminal 20 displays alarms in order of "IOM Fail N-IO ..." (the bus node IOM is in the fail state), "IOM Out Service ..." (IOM is unavailable), "IOM In Service ..." (IOM is available), and "N-IO Self Diag Error ..." (bus node self-diagnosis error). Meanwhile, a black diamond at the top of each of the alarms indicates a state before recovery or during recovery from the temporary anomaly. Further, a white diamond at the top of each of the alarms indicates a state after recovery from the temporary anomaly.

As illustrated in an example of a "historical message report window" in FIG. 16(1), the engineer terminal 20 displays a system repot with the same content as the system alarm for which the alarm mask is not executed.

As illustrated in an example of a "system alarm view" in FIG. 16(2), when an anomaly is detected in the input output module M, when the alarm mask function setting is enabled, and when the alarm is a second or subsequent internal memory diagnosis anomaly, the engineer terminal 20 displays a system alarm for which the alarm mask is not executed, without performing automatic restart. In the example of the "system alarm view" in FIG. 16(2), the "system alarm view" in FIG. 16(1) is displayed.

As illustrated in an example of a "historical message report window" in FIG. 16(2), the engineer terminal 20 displays a system repot with the same content as the system alarm for which the alarm mask is not executed.

As described above, when a second or subsequent internal memory diagnosis anomaly has occurred in the input output module M, the controller 10 displays a system alarm without performing automatic restart to notify the engineer E that the alarm needs to be handled. Further, the controller 10 sets a system report to a viewable state to allow the engineer E to handle the alarm if needed.

### 3-4. Specific example 4

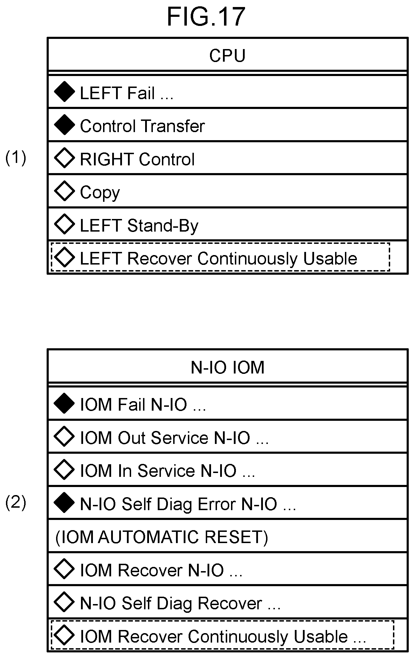

A specific example 4 of each of the processes of the anomaly monitoring system 100 will be described below with reference to FIG. 17. FIG. 17 is a diagram illustrating the specific example 4 of each of the processes of the anomaly monitoring system 100 according to one embodiment. In the following, a system alarm view to which a continuous use permission message for a temporary anomaly in the processor module P of the controller 10 and an internal memory diagnosis anomaly in the input output module M is added will be described.

### 3-4-1. Continuous use permission message for processor module P

As illustrated in an example in FIG. 17(1), when an anomaly is detected in the processor module P and when the continuous use permission message function setting is enabled, the engineer terminal 20 displays a system alarm to which a continuous use permission message for a temporary anomaly in the processor module P is added. In the example illustrated in FIG. 17(1), the engineer terminal 20 displays alarms in order of "LEFT Fail ..." (the left CPU is in the fail state), "Control Transfer" (the control CPU is transferring), "RIGHT Control" (the right CPU is in the control state), "Copy" (data copy is in progress), and "LEFT Stand-By" (the left CPU is in the stand-by state), and displays "LEFT Recover Continuously Usable" (the left CPU is recovered and continuously usable) that is the continuous use permission message. Meanwhile, a black diamond at the top of each of the alarms indicates a state before recovery or during recovery from the temporary anomaly, the temporary anomaly. Further, a white diamond at the top of each of the alarms indicates a state after recovery from the temporary anomaly.

### 3-4-2. Continuous use permission message for input output module M

As illustrated in an example in FIG. 17(2), when an anomaly is detected in the input output module M and when the continuous use permission message function setting is enabled, the engineer terminal 20 displays a system alarm to which a continuous use permission message for an internal memory diagnosis anomaly in the input output module M is added. In the example illustrated in FIG. 17(2), the engineer terminal 20 displays alarms in order of "IOM Fail N-IO ..." (the bus node IOM is in the fail state), "IOM Out Service N-IO ..." (the bus the node IOM is unavailable), "IOM In Service N-IO .." (the bus the node IOM is available), "N-IO Self Diag Error N-IO N-IO ..." (bus node self-diagnosis error), "IOM Recover N-IO ..." (the bus node IOM is recovered), and "N-IO Self Diag Recover ..." (bus node self-diagnosis recovery), and displays "IOM Recover Continuously Usable" (IOM is recovered and continuously usable) that is the continuous use permission message. Meanwhile, a black diamond at the top of each of the alarms indicates a state before recovery or during recovery from the temporary anomaly, the temporary anomaly. Further, a white diamond at the top of each of the alarms indicates a state after recovery from the temporary anomaly.

As described above, when an anomaly that is caused by a soft error has occurred in the processor module P or the input output module M and recovery by automatic restart is successful, the controller 10 adds the continuous use permission message to the system alarm to notify the engineer E that the alarm need not be handled.

### 4. Flow of each of processes of anomaly monitoring system 100

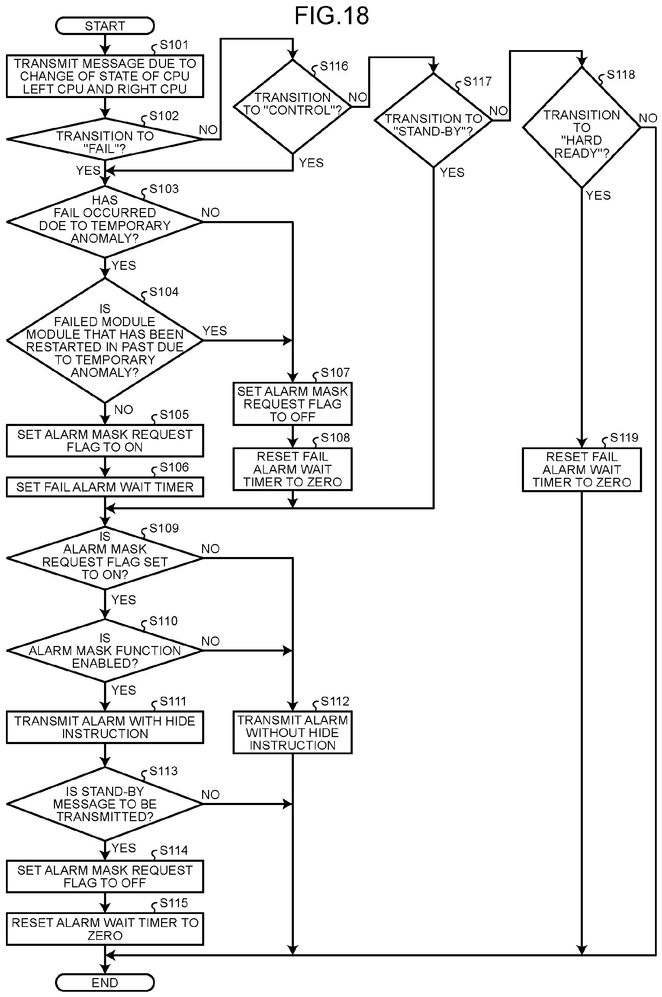

The flow of each of the processes of the anomaly monitoring system 100 according to one embodiment will be described below with reference to FIG. 18 to FIG. 23. In the following, a specific example 1 to a specific example 3 of each of the processes of the anomaly monitoring system 100 will be described.

### 4-1. Specific example 1

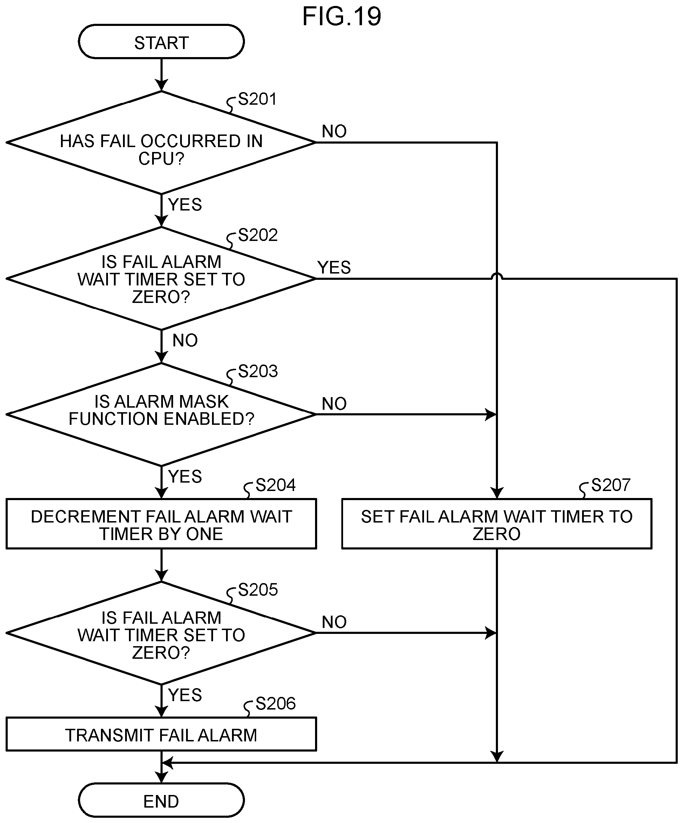

The specific example 1 of the flow of each of the processes of the anomaly monitoring system 100 according to one embodiment will be described below with reference to FIG. 18 and FIG. 19. In the following, as the specific example 1, the flow of each of processes on a temporary anomaly in the processor module P of the controller 10 will be described.

### 4-1-1. Specific example 1-1

A specific example 1-1 of the flow of each of the processes of the anomaly monitoring system 100 according to one embodiment will be described below with reference to FIG. 18. FIG. 18 is a flowchart illustrating the specific example 1-1 of the flow of each of the processes of the anomaly monitoring system 100 according to one embodiment. In the following, as the flow of each of the processes on a temporary anomaly in the processor module P of the controller 10, a flow of a process of transmitting a system alarm in accordance with a change of a state of the processor module P will be described. Meanwhile, processes from Step S101 to Step S119 may be performed in a different order. Further, some of the processes from Step S101 to Step S119 may be omitted.

The controller 10 transmits a message due to a change of a state of the processor module P (for example: the left CPU and the right CPU) (Step S101). When the processor module P transition to "Fail" (Step S102: Yes), the controller 10 goes to the process at Step S103. In contrast, when the processor module P does not transition to "Fail" (Step S102: No), the controller 10 goes to the process at Step S116.

When the processor module P has failed due to a temporary anomaly (Step S103: Yes), the controller 10 goes to the process at Step S104. In contrast, when the processor module P has not failed due to a temporary anomaly (Step S103: No), the controller 10 goes to the process at Step S107.

When the failed processor module P is the processor module P that has been restarted in the past due to a temporary anomaly (Step S104: Yes), the controller 10 goes to the process at Step S107. In contrast, when the failed processor module P is not the processor module P that has been restarted in the past due to a temporary anomaly (Step S104: No), the controller 10 goes to the process at Step S105.

The controller 10 sets an alarm mask request flag to an ON state (Step S105). Further, the controller 10 sets a fail alarm wait timer (Step S106), and goes to the process at Step S109.

The controller 10 sets the alarm mask request flag to an OFF state (Step S107). Further, the controller 10 resets the fail alarm wait timer to zero (Step S108), and goes to the process at Step S109.

When the alarm mask request flag is set to the ON state (Step S109: Yes), the controller 10 goes to the process at Step S110. In contrast, when the alarm mask request flag is not set to the ON state (Step S109: No), the controller 10 goes to the process at Step S112.

When the alarm mask function is enabled (Step S110: Yes), the controller 10 goes to the process at Step S111. In contrast, When the alarm mask function is disabled (Step S110: No), the controller 10 goes to the process at Step S112.

The controller 10 transmits an alarm with a hide instruction (Step S111), and goes to the process at Step S113.

The controller 10 transmits an alarm without the hide instruction (Step S112), and terminates the process.

When a stand-by message is to be transmitted (Step S113: Yes), the controller 10 goes to the process at Step S114. In contrast, when the stand-by message is not to be transmitted (Step S113: No), the controller 10 terminates the process.

The controller 10 sets the alarm mask request flag to the OFF state (Step S114), resets the fail alarm wait timer to zero (Step S115), and terminates the process.

When transition to "Control" is performed (Step S116: Yes), the controller 10 goes to the process at Step S103. In contrast, when transition to "Control" is not performed (Step S116: No), the controller 10 goes to the process at Step S117.

When transition to "Stand-By" is performed (Step S117: Yes), the controller 10 goes to the process at Step S109. In contrast, when transition to "Stand-By" is not performed (Step S117: No), the controller 10 goes to the process at Step S118.

When transition to "Hard Ready" is performed (Step S118: Yes), the controller 10 goes to the process at Step S119. **In** contrast, when transition to "Hard Ready" is not performed (Step S118: No), the controller 10 terminates the process.

The controller 10 resets the fail alarm wait timer to zero (Step S119), and terminates the process.

### 4-1-2. Specific example 1-2

A specific example 1-2 of the flow of each of the processes of the anomaly monitoring system 100 according to one embodiment will be described below with reference to FIG. 19. FIG. 19 is a flowchart illustrating the specific example 1-2 of the flow of each of the processes of the anomaly monitoring system 100 according to one embodiment. **In** the following, as the flow of each of the processes on a temporary anomaly in the processor module P of the controller 10, a flow of a process of transmitting a fail alarm when the processor module P is not recovered by first restart will be described. Meanwhile, processes from Step S201 to Step S207 may be performed in a different order. Further, some of the processes from Step S201 to Step S207 may be omitted.

When a fail has occurred in the processor module P (Step S201: Yes) the controller 10 goes to the process at Step S202. **In** contrast, when a fail has not occurred in the processor module P (Step S201: No), the controller 10 goes to the process at Step S207.

When the fail alarm wait timer is set to zero (Step S202: Yes), the controller 10 terminates the process. **In** contrast, when the fail alarm wait timer is not set to zero (Step S202: No), the controller 10 goes to the process at Step S203.

When the alarm mask function is enabled (Step S203: Yes), the controller 10 goes to the process at Step S204. **In** contrast, When the alarm mask function is disabled (Step S203: No), the controller 10 goes to the process at Step S207.

The controller 10 decrements the fail alarm wait timer by one (Step S204), and goes to the process at Step S205.

When the fail alarm wait timer is set to zero (Step S205: Yes), the controller 10 goes to the process at Step S206. **In** contrast, when the fail alarm wait timer is not set to zero (Step S205: No), the controller 10 terminates the process.

The controller 10 transmits the fail alarm (Step S206), and terminates the process.

The controller 10 sets the fail alarm wait timer to zero (Step S207), and terminates the process.

### 4-2. Specific example 2

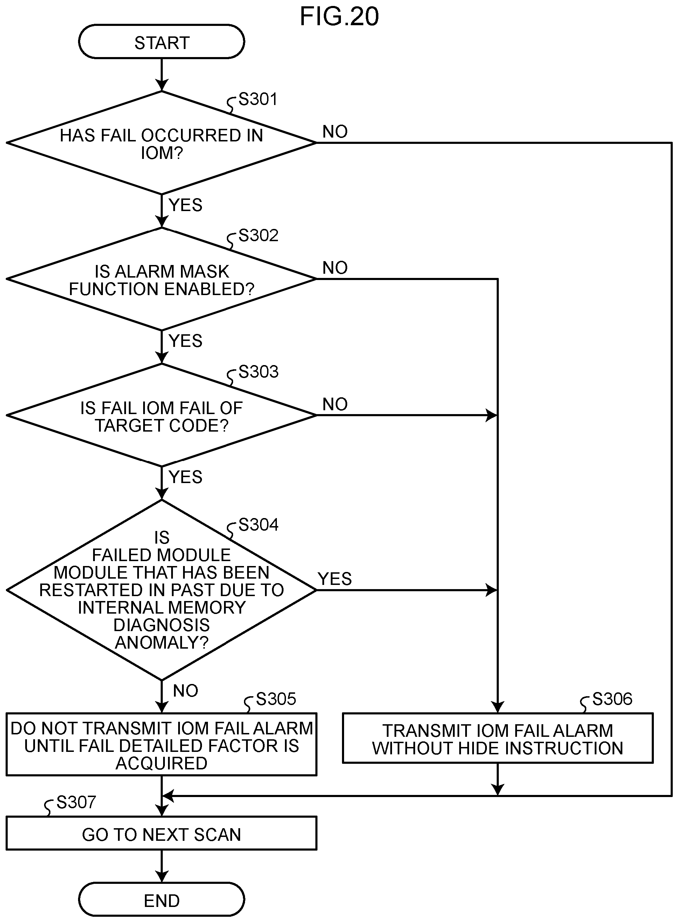

The specific example 2 of the flow of each of the processes of the anomaly monitoring system 100 according to one embodiment will be described below with reference to FIG. 20 to FIG. 22. **In** the following, as the specific example 2, the flow of each of processes on a temporary anomaly in the input output module M of the controller 10 will be described.

### 4-2-1. Specific example 2-1

A specific example 2-1 of the flow of each of the processes of the anomaly monitoring system 100 according to one embodiment will be described below with reference to FIG. 20. FIG. 20 is a flowchart illustrating the specific example 2-1 of the flow of each of the processes of the anomaly monitoring system 100 according to one embodiment. **In** the following, as the flow of each of the processes on a temporary anomaly in the input output module M of the controller 10, a flow of a process of transmitting a fail alarm of the input output module M due to first scan will be described. Meanwhile, processes from Step S301 to Step S307 may be performed in a different order. Further, some of the processes from Step S301 to Step S307 may be omitted.

When a fail has occurred in the input output module M (Step S301: Yes), the controller 10 goes to the process at Step S302. **In** contrast, when a fail has not occurred in the input output module M (Step S301: No), the controller 10 goes to the process at Step S307.

When the alarm mask function is enabled (Step S302: Yes), the controller 10 goes to the process at Step S303. **In** contrast, When the alarm mask function is disabled (Step S302: No), the controller 10 goes to the process at Step S306.

When the fail is a fail of the input output module M of the target code (Step S303: Yes), the controller 10 goes to the process at Step S304. In contrast, when the fail is not a fail of the input output module M of the target code (Step S303: No), the controller 10 goes to the process at Step S306.

When the failed input output module M is the input output module M that has been restarted in the past due to an internal memory diagnosis anomaly (Step S304: Yes), the controller 10 goes to the process at Step S306. In contrast, when the failed input output module M is not the input output module M that has been restarted in the past due to an internal memory diagnosis anomaly (Step S304: No), the controller 10 goes to the process at Step S305.

The controller 10 does not transmit the fail alarm of the input output module M until a fail detailed factor is acquired (Step S305), and goes to the process at Step S307.

The controller 10 transmits the fail alarm of the input output module M without a hide instruction (Step S306), and goes to the process at Step S307.

The controller 10 goes to next scan (Step S307), and terminates the process.

### 4-2-2. Specific example 2-2

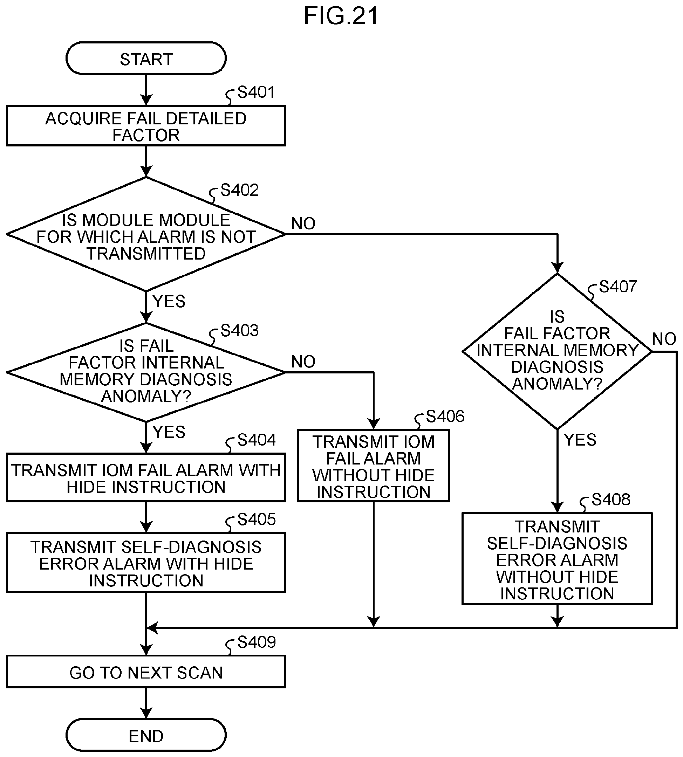

A specific example 2-2 of the flow of each of the processes of the anomaly monitoring system 100 according to one embodiment will be described below with reference to FIG. 21. FIG. 21 is a flowchart illustrating the specific example 2-2 of the flow of each of the processes of the anomaly monitoring system 100 according to one embodiment. In the following, as the flow of each of the processes on a temporary anomaly in the input output module M of the controller 10, a flow of a process of transmitting a fail alarm of the input output module M due to second scan will be described. Meanwhile, processes from Step S401 to Step S409 may be performed in a different order. Further, some of the processes from Step S401 to Step S409 may be omitted.

The controller 10 acquires the fail detailed factor (Step S401), and goes to the process at Step S402.

When the scanned input output module M is a module for which an alarm is not transmitted (Step S402: Yes), the controller 10 goes to the process at Step S403. In contrast, when the scanned input output module M is not a module for which an alarm is not transmitted (Step S402: No), the controller 10 goes to the process at Step S407.

When a fail factor is the internal memory diagnosis anomaly (Step S403: Yes), the controller 10 goes to the process at Step S404. In contrast, when the fail factor is not the internal memory diagnosis anomaly (Step S403: No), the controller 10 goes to the process at Step S406.

The controller 10 transmits the fail alarm of the input output module M with the hide instruction (Step S404), transmits a self-diagnosis error alarm of the input output module M with a hide instruction (Step S405), and goes to the process at Step S409.

The controller 10 transmits the fail alarm of the input output module M without the hide instruction (Step S406), and goes to the process at Step S409.

When the fail factor is the internal memory diagnosis anomaly (Step S407: Yes), the controller 10 goes to the process at Step S408. In contrast, when the fail factor is not the internal memory diagnosis anomaly (Step S407: No), the controller 10 goes to the process at Step S409.

The controller 10 transmits the self-diagnosis error alarm of the input output module M without the hide instruction (Step S408), and goes to the process at Step S409.

The controller 10 goes to next scan (Step S409), and terminates the process.

### 4-2-3. Specific example 2-3

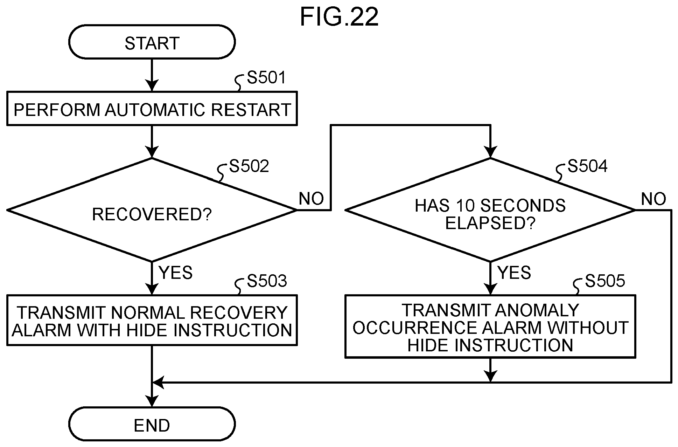

A specific example 2-3 of the flow of each of the processes of the anomaly monitoring system 100 according to one embodiment will be described below with reference to FIG. 22. FIG. 22 is a flowchart illustrating the specific example 2-3 of the flow of each of the processes of the anomaly monitoring system 100 according to one embodiment. **In** the following, as the flow of each of the processes on a temporary anomaly in the input output module M of the controller 10, a flow of a process of transmitting an alarm of the input output module M after automatic restart will be described. Meanwhile, processes from Step S501 to Step S505 may be performed in a different order. Further, some of the processes from Step S501 to Step S505 may be omitted.

The controller 10 performs automatic restart (Step S501), and goes to the process at Step S502.

When the input output module M is recovered by automatic restart (Step S502: Yes), the controller 10 goes to the process at Step S503. In contrast, when the input output module M is not recovered by automatic restart (Step S502: No), the controller 10 goes to the process at Step S504.

The controller 10 transmits a normal recovery alarm of the input output module M with a hide instruction (Step S503), and terminates the process.

When 10 seconds has elapsed since the automatic restart (Step S504: Yes), the controller 10 goes to the process at Step S505. In contrast, when 10 seconds has not elapsed since the automatic restart (Step S504: No), the controller 10 terminates the process.

The controller 10 transmits the anomaly occurrence alarm of the input output module M without the hide instruction (Step S505), and terminates the process.

### 4-3. Specific example 3

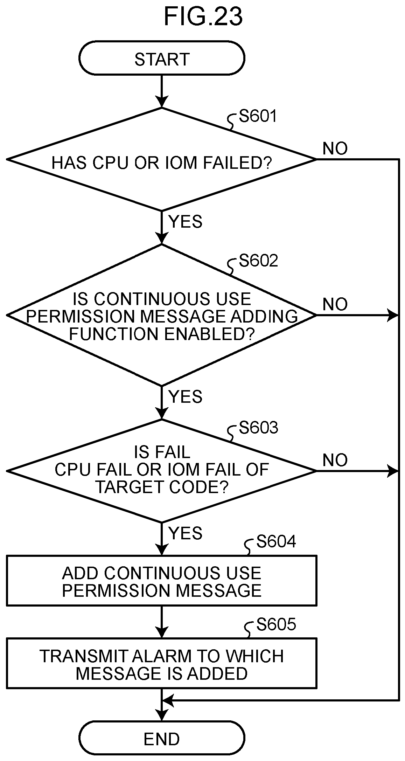

The specific example 3 of the flow of each of the processes of the anomaly monitoring system 100 according to one embodiment will be described below with reference to FIG. 23. FIG. 23 is a flowchart illustrating the specific example 3 of the flow of each of the processes of the anomaly monitoring system 100 according to one embodiment. In the following, as the third specific example and as the flow of each of the processes on a temporary anomaly in the processor module P or the input output module M of the controller 10, a flow of a process of transmitting an alarm to which the continuous use permission message is added will be described. Meanwhile, processes from Step S601 to Step S605 may be performed in a different order. Further, some of the processes from Step S601 to Step S605 may be omitted.

When the processor module P or the input output module M has failed (Step S601: Yes), the controller 10 goes to the process at Step S602. In contrast, when the processor module P or the input output module M has not failed (Step S601: No), the controller 10 terminates the process.

When the continuous use permission message adding function is enabled (Step S602: Yes), the controller 10 goes to the process at Step S603. In contrast, when the continuous use permission message adding function is disabled (Step S602: No), the controller 10 terminates the process.

When the fail is a fail of the processor module P or the input output module M of the target code (Step S603: Yes), the controller 10 goes to the process at Step S604. In contrast, when the fail is not a fail of the processor module P of the target code or a fail of the input output module M (Step S603: No), the controller 10 terminates the process.

The controller 10 adds the continuous use permission message (Step S604), transmits the alarm to which the message is added (Step S605), and terminates the process.

### 5. Effects of one embodiment

Lastly, effects of one embodiment will be described. In the following, a first effect to an eleventh effect corresponding to the processes according to one embodiment will be described.

### 5-1. First effect

Firstly, in one process according to one embodiment as described above, the controller 10 collects data from a device that is included in a system, detects an anomaly that has occurred in at least one of the processor module P and the input output module M based on the collected data, executes an action on an alarm that indicates the anomaly when the detected anomaly is likely to be caused by a soft error, and notifies the engineer E of the alarm on which the action is executed. Therefore, in this process, it is possible to reduce handling of an alarm that is caused by a soft error.

### 5-2. Second effect

Secondly, in one process according to one embodiment as described above, the controller 10 detects a temporary anomaly that has occurred in the processor module **P,** executes masking on the alarm that indicates the temporary anomaly when the temporary anomaly is detected, and notifies the engineer E of the alarm on which the masking is executed. Therefore, in this process, by executing the alarm mask on the temporary anomaly that has occurred in the processor module P, it is possible to reduce handling of an alarm that is caused by a soft error.

### 5-3. Third effect

Thirdly, in one process according to one embodiment as described above, when a second or subsequent temporary anomaly is detected in the same processor module P, the controller 10 notifies the engineer E of the alarm on which the masking is not executed. Therefore, in this process, by not executing the alarm mask on the temporary anomaly that is a second or subsequent temporary anomaly in the same processor module P, it is possible to handle an alarm that is caused by a soft error.

### 5-4. Fourth effect

Fourthly, in one process according to one embodiment as described above, when recovery from the temporary anomaly that has occurred in the processor module P is unsuccessful, the controller 10 notifies the engineer E of the alarm on which the masking is not executed. Therefore, in this process, by re-notifying the alarm when automatic recovery from the temporary anomaly that has occurred in the processor module P is unsuccessful, it is possible to handle an alarm that is caused by a soft error.

### 5-5. Fifth effect

Fifthly, in one process according to one embodiment as described above, the controller 10 detects an internal memory diagnosis anomaly that has occurred in the input output module M, executes masking on the alarm that indicates the internal memory diagnosis anomaly when the internal memory diagnosis anomaly is detected, and notifies the engineer E of the alarm on which the masking is executed. Therefore, in this process, by executing the alarm mask on the internal memory diagnosis anomaly that has occurred in the input output module M, it is possible to reduce handling of an alarm that is caused by a soft error.

### 5-6. Sixth effect

Sixthly, in one process according to one embodiment as described above, when the second or subsequent internal memory diagnosis anomaly is detected in the same input output module M, the controller 10 d notifies the engineer E of the alarm on which the masking is not executed. Therefore, in this process, by not executing the alarm mask on the internal memory diagnosis anomaly that is a second or subsequent internal memory diagnosis anomaly in the same input output module M, it is possible to handle an alarm that is caused by a soft error.

### 5-7. Seventh effect

Seventhly, in one process according to one embodiment as described above, when recovery from the internal memory diagnosis anomaly that has occurred in the input output module M is unsuccessful, the controller 10 notifies the engineer E of the alarm on which the masking is not executed. Therefore, in this process, by re-notifying the alarm when automatic recovery from the internal memory diagnosis anomaly that has occurred in the input output module M is unsuccessful, it is possible to handle an alarm that is caused by a soft error.

### 5-8. Eighth effect

Eighthly, in one process according to one embodiment as described above, the controller 10 detects a temporary anomaly that has occurred in the processor module **P,** adds the continuous use permission message indicating that continuous use is permitted to the alarm when the temporary anomaly is detected, and notifies the engineer E of the alarm to which the continuous use permission message is added. Therefore, in this process, by notifying the continuous use permission message when an anomaly that is caused by a soft error has occurred in the processor module P, it is possible to reduce handling of an alarm that is caused by a soft error.

### 5-9. Ninth effect

Ninthly, in one process according to one embodiment as described above, the controller 10 detects an internal memory diagnosis anomaly that has occurred in the input output module M, adds the continuous use permission message indicating that continuous use is permitted to the alarm when the internal memory diagnosis anomaly is detected, and notifies the engineer E of the alarm to which the continuous use permission message is added. Therefore, in this process, by notifying the continuous use permission message when an anomaly that is caused by a soft error has occurred in the input output module M, it is possible to reduce handling of an alarm that is caused by a soft error.

### 5-10. Tenth effect

Tenthly, in one process according to one embodiment as described above, the controller 10 notifies the engineer E of a system report that indicates a history of a system alarm. Therefore, in this process, by notifying the system report that indicates the history of the system alarm when an anomaly that is caused by a soft error has occurred in the processor module P or the input output module M, it is possible to handle an alarm that is caused by a soft error.

### 5-11. Eleventh effect

Eleventhly, in one process according to one embodiment as described above, the system is a plant, and the device is the field device 30 that is included in the plant. Therefore, in this process, in the plant that includes the field device 30, it is possible to reduce handling of an alarm that is caused by a soft error.

### 6. System

The processing procedures, control procedures, specific names, and information including various kinds of data and parameters illustrated in the above-described document and drawings may be arbitrarily changed unless otherwise specified.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Moreover, all or an arbitrary part of various kinds of processing functions that are implemented by the apparatuses may be realized by a CPU or a program that is analyzed and executed by the CPU, or may be realized by hardware using wired logic.

### 7. Hardware

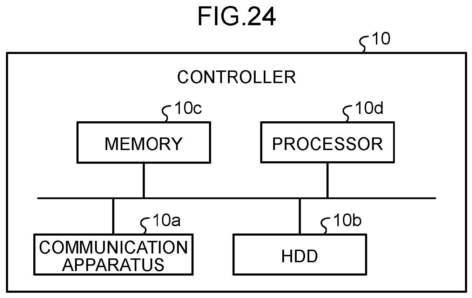

A hardware configuration example of the controller 10 will be described. Meanwhile, the other apparatuses may have the same hardware configurations. FIG. 24 is a diagram illustrating a hardware configuration example according to one embodiment. As illustrated in FIG. 24, the controller 10 includes a communication apparatus 10a, a Hard Disk Drive (HDD) 10b, a memory 10c, and a processor 10d. Further, all of the units illustrated in FIG. 24 are connected to one another via a bus or the like.

The communication apparatus 10a is a network interface card or the like, and performs communication with a different server or the like. The HDD 10b stores therein a program or a database for implementing the functions as illustrated in FIG. 4.

The processor 10d reads, from the HDD 10b or the like, a program that executes the same processes as those of each of the processing units illustrated in FIG. 4, loads the program onto the memory 10c, and executes the processes that implement each of the functions illustrated in FIG. 4 or the like. For example, the processes implement the same functions as those of each of the processing units that are included in the controller 10. Specifically, the processor 10d reads, from the HDD 10b or the like, a program that has the same functions as those of the collection unit 13a, the detection unit 13b, the execution unit 13c, the notification unit 13d, and the like. Further, the processor 10d executes a process for implementing the same processes as those of the collection unit 13a, the detection unit 13b, the execution unit 13c, the notification unit 13d, and the like.

In this manner, the controller 10 operates as an apparatus that reads and executes the program to implement various kinds of processing methods. Further, the controller 10 is able to implement the same functions as those of one embodiment as described above by causing a medium reader to read the above-described program from a recording medium and execute the read program. Meanwhile, the program described in the other embodiment need not always be executed by the controller 10. For example, the present disclosure may be applied in the same manner even when a different computer or a different server apparatus executes the above-described program or the different computer and the different server apparatus execute the above-described program in a cooperative manner.

The program may be distributed via a network, such as the Internet. Further, the program may be recorded in a computer readable recording medium, such as a hard disk, a flexible disk (FD), a compact disc (CD)-ROM, a Magneto-Optical disk (MO), or a Digital Versatile Disk (DVD), and may be executed by being read from the recording medium by a computer.

According to one aspect of the present disclosure, it is possible to reduce handling of an alarm that is caused by a soft error.

## Claims

1. A controller (10) comprising:
a collection unit (13a) that collects data from a device (30) that is included in a system;
a detection unit (13b) that detects an anomaly that has occurred in at least one of a processor module (P) and an input output module (M) based on the collected data;
an execution unit (13c) that executes an action on an alarm that indicates the anomaly when the detected anomaly is likely to be caused by a soft error; and
a notification unit (13d) that notifies a user (E) of the alarm on which the action is executed.

2. The controller (10) according to claim 1, wherein
the detection unit (13b) detects a temporary anomaly that has occurred in the processor module (P),
the execution unit (13c) executes masking on the alarm that indicates the temporary anomaly when the temporary anomaly is detected, and
the notification unit (13d) notifies the user (E) of the alarm on which the masking is executed.

3. The controller (10) according to claim 2, wherein when a second or subsequent temporary anomaly is detected in the same processor module (P), the notification unit (13d) notifies the user (E) of the alarm on which the masking is not executed.

4. The controller (10) according to claim 2 or 3, wherein when recovery from the temporary anomaly that has occurred in the processor module (P) is unsuccessful, the notification unit (13d) notifies the user (E) of the alarm on which the masking is not executed.

5. The controller (10) according to any one of claims 1 to 4, wherein
the detection unit (13b) detects a diagnosis anomaly that has occurred in the input output module (M),
the execution unit (13c) executes masking on the alarm that indicates the diagnosis anomaly when the diagnosis anomaly is detected, and
the notification unit (13d) notifies the user (E) of the alarm on which the masking is executed.

6. The controller (10) according to claim 5, wherein when a second or subsequent diagnosis anomaly is detected in the same input output module (M), the notification unit (13d) notifies the user (E) of the alarm on which the masking is not executed.

7. The controller (10) according to claim 5 or 6, wherein when recovery from the diagnosis anomaly that has occurred in the input output module (M) is unsuccessful, the notification unit (13d) notifies the user (E) of the alarm on which the masking is not executed.

8. The controller (10) according to any one of claims 1 to 7, wherein
the detection unit (13b) detects a temporary anomaly that has occurred in the processor module (P),
the execution unit (13c) adds a message indicating that continuous use is permitted to the alarm when the temporary anomaly is detected, and
the notification unit (13d) notifies the user (E) of the alarm to which the message is added.

9. The controller (10) according to any one of claims 1 to 8, wherein
the detection unit (13b) detects a diagnosis anomaly that has occurred in the input output module (M),
the execution unit (13c) adds a message indicating that continuous use is permitted to the alarm when the diagnosis anomaly is detected, and
the notification unit (13d) notifies the user of the alarm to which the message is added.

10. The controller (10) according to any one of claims 1 to 9, wherein the notification unit (13d) notifies the user (E) of a report that indicates a history of the alarm.

11. The controller (10) according to any one of claims 1 to 10, wherein
the system is a plant, and
the device (30) is a field device that is included in the plant.

12. A control method that is implemented by a computer (10), the control method comprising:
collecting data from a device (30) that is included in a system;
detecting an anomaly that has occurred in at least one of a processor module (P) and an input output module (M) based on the collected data;
executing an action on an alarm that indicates the anomaly when the detected anomaly is likely to be caused by a soft error; and
notifying a user (E) of the alarm on which the action is executed.

13. A control program that causes a computer (10) to execute a process, the process comprising:
collecting data from a device (30) that is included in a system;
detecting an anomaly that has occurred in at least one of a processor module (P) and an input output module (M) based on the collected data;
executing an action on an alarm that indicates the anomaly when the detected anomaly is likely to be caused by a soft error; and
notifying a user (E) of the alarm on which the action is executed.
